(19) Europäisches Patentamt
European Patent Office
Office européen des brevets

(11) EP 1 925 970 A2

(12) EUROPEAN PATENT APPLICATION

(43) Date of publication:
**28.05.2008 Bulletin 2008/22**

(51) Int Cl.:
***G02F 1/1335*** *(2006.01)*

(21) Application number: **07121544.6**

(22) Date of filing: **26.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **27.11.2006 KR 20060117918**

(71) Applicant: **Samsung Electronics Co., Ltd.**
**Suwon-si**
**Gyeonggi-do 443-742 (KR)**

(72) Inventor: **Cho, Sung Nae,**
**c/o Samsung Advanced Institute of Technology**
**Yongin-si,**
**Gyeonggi-do (KR)**

(74) Representative: **Greene, Simon Kenneth**
**Elkington and Fife LLP**
**Prospect House**
**8 Pembroke Road**
**Sevenoaks, Kent TN13 1XR (GB)**

(54) **Liquid crystal display having reflection region**

(57) Provided is a liquid crystal display (LCD) including a rear substrate (101) and a front substrate (110); a liquid crystal (LC) layer interposed between the rear substrate and the front substrate; and a reflection region (120) formed on at least a portion of a surface of the rear substrate disposed opposite the LC layer, to reflect external light to the LC layer. The reflection region includes an array of hybrid reflection surfaces (103), each hybrid reflection surface including a first reflection surface (103a) with a convex curved surface shape in the center thereof and second reflection surfaces (103b) with a spread-out shape formed around the first reflection surface.

FIG. 1

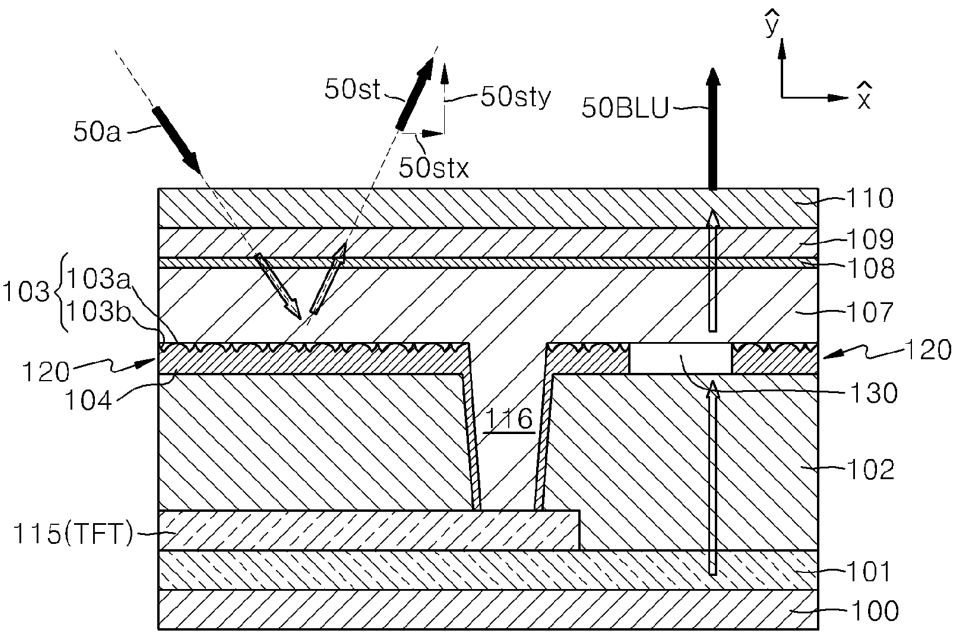


EP 1 925 970 A2

## Description

### BACKGROUND OF THE INVENTION

Apparatuses and methods consistent with the present invention relate to a liquid crystal display (LCD), and more particularly, to an (LCD having a reflection region that can reflect external light in a liquid crystal (LC) panel.

LCDs are flat panel displays (FPDs) that include an array of monochromatic or polychromatic pixels. Because the LCDs do not consume much power, they are widely used in electronic appliances that receive power from batteries, and thus require low power consumption.

LCDs may be classified into transmissive LCDs, reflective LCDs, and transreflective LCDs according to the position of a light source for irradiating light to LCs. In the transmissive LCD, LCs are irradiated with light emitted by a backlight unit (BLU) disposed behind an LC panel.

LCDs are applied to products such as FPDs, televisions, personal digital assistants (PDAs), or cellular phones requiring high brightness level.

However, in the case of the transmissive LCD, a BLU that consumes much power is used as a light source.

In the case of the reflective LCD, external light is used as a light source for irradiating light to LCs. That is, external light is reflected by a reflector disposed behind an LC layer. Since the reflective LCD includes no active light source such as a BLU used in the transmissive LCD, the entire power consumption of the reflective LCD is greatly reduced. Therefore, the reflective LCD can be applied to products requiring low power consumption, such as some digital watches and calculators.

However, the reflective LCD also has some potential disadvantages. First, since the reflective LCD does not use a light source such as a BLU to irradiate light, the reflective LCD cannot be used at a place without external light. Also, light must pass through an LC layer twice in the reflective LCD, so that the reflective LCD has a lower contrast ratio than the transmissive LCD.

In many commercially available products such as PDAs and cellular phones, which need both low power consumption and high quality image, techniques of a reflective LCD and a transmissive LCD are combined into a single package, which is typically known as a transreflective LCD, thereby obtaining both potential advantages of the reflective LCD and the transmissive LCD. The transreflective LCD is switched between a reflective LCD mode and a transmissive LCD mode depending on whether or not there is an external light source around the transreflective LCD. The reflective LCD mode is enabled in the daytime or at a place where the transreflective LCD is sufficiently exposed to external light, while the transmissive LCD mode is enabled in the nighttime or a dark environment.

Although the technology of transreflective LCDs is apparently complete, finer tuning is still required to keep the balance between low power consumption and high image displaying quality. Since the technology of the transreflective LCD is obtained only by combining the technologies of a reflective LCD and a transmissive LCD, some problems of both the reflective and transmissive LCDs remain unsolved in a transreflective LCD. For example, the transreflective LCD still has a poor contrast ratio like the reflective LCD.

The reflective LCD has a poor contrast ratio because light passes through an LC layer twice and only small part of external light reflected by a reflector is irradiated to the LC layer. Since it is essential that light pass an LC layer twice in the reflective LCD, a possible way is to develop a method for increasing part of external light reflected by the reflector to be irradiated to the LC layer.

From among light reflected by a reflector, only a light component passing through an LC layer in a vertical direction, i.e., a vertical light component substantially contributes to irradiation of the LC layer to indicate good contrast ratio.

Therefore, in order to enhance the contrast ratio of the transreflective LCD, it is required to increase the ratio of the vertical light component passing through the LC layer to the light reflected by the reflector.

### SUMMARY OF THE INVENTION

Exemplary embodiments of the present invention overcome the above disadvantages and other disadvantages not described above. In addition, the present invention is not required to overcome the disadvantages described above, and an exemplary embodiment of the present invention may not overcome any of the problems described above.

According to an aspect of the present invention, there is provided an LCD including: a rear substrate; a front substrate; an LC layer interposed between the rear substrate and the front substrate; and a reflection region disposed on at least a portion of a surface of the rear substrate disposed opposite the LC layer to reflect external light to the LC layer, the reflection region comprises an array of hybrid reflection surfaces, each hybrid reflection surface including a first reflection surface having a convex curved surface shape in the center thereof and second reflection surfaces having a spread-out shape disposed around the first reflection surface.

The present invention provides an LCD having an improved reflection region disposed in an LC panel in order to increase a ratio of a vertical light component to all external light that is incident on the LC panel and reflected by the reflection region.

The first reflection surface may be a parabolic convex surface having a parabolic section.

In this case, the second reflection surface may be a portion of a parabolic concave surface.

The first and second reflection surfaces may have the same curvature.

The second reflection surface may be a portion of a parabolic concave surface having the focus on the same axis as that of the first reflection surface and the same focal length as that of the first reflection surface. Also, the second reflection surface may be disposed in a region except for the first reflection surface of the hybrid reflection surface.

The first and second reflection surfaces may be 3-dimensional surfaces symmetric with respect to an axis.

When a distance between the focuses of the first and second reflection surfaces is defined as "s", the hybrid reflection surface may satisfy one of s=0, s>0, and s<0.

The second reflection surface may be a concave curved surface.

The LCD may further include a first medium layer disposed on the rear substrate and having a surface opposite the front substrate on which the array of the hybrid reflection surfaces is disposed.

In this case, the first medium layer may be formed of a metal.

The LCD may further include a second medium layer which planarizes the surface of the first medium layer on which the array of the hybrid reflection surfaces is disposed. The second medium layer may be formed of a different material from the first medium layer.

The second medium layer may be formed of a transparent dielectric material.

The hybrid reflection surfaces may be regularly arranged to be spaced apart from one another not to contact one another or contact one another.

Alternatively, the hybrid reflection surfaces may be irregularly arranged so that some of the hybrid reflection surfaces contact one another, while the others are spaced apart from one another.

The LCD may further include: a backlight unit disposed behind the rear substrate; and a transmission region for transmitting light irradiated by the backlight unit toward the LC layer and which is a trans reflective LCD.

The LCD may be a reflective LCD.

The LCD may further include a color filter disposed on the front substrate.

## BRIEF DESCRIPTION OF THE DRAWINGS

The above and other aspects of the present invention will become more apparent by describing in detail exemplary embodiments thereof with reference to the attached drawings in which:

FIG. 1 is a cross-sectional view of an LCD according to an exemplary embodiment of the present invention;

FIG. 2 is a magnified view of a hybrid reflection surface of FIG. 1;

FIG. 3 is a cross-sectional view of an LCD according to another exemplary embodiment of the present invention;

FIGS. 4 through 6 illustrate various arrangements of hybrid reflection surfaces of a reflection region used in the LCDs shown in FIGS. 1 and 3, according to exemplary embodiments of the present invention;

FIG. 7 is a cross-sectional view taken along line VII-VII of FIG. 4;

FIG. 8 is a cross-sectional view taken along line VIII-VIII of FIG. 6;

FIG. 9 is a cross-sectional view of a deep parabolic reflection convex surface;

FIG. 10 is a cross-sectional view of a deep parabolic reflection concave surface;

FIG. 11 is a cross-sectional view of three deep parabolic reflection convex surfaces arranged in a line;

FIG. 12 is a cross-sectional view of three deep parabolic reflection concave surfaces arranged in a line;

FIG. 13 is a schematic view of an apparatus for measuring scattered power;

FIG. 14 is a graph showing calculation of scattered power collected by a detector with respect to three deep parabolic concave surfaces arranged in a line and three deep parabolic convex surfaces arranged in a line;

FIG. 15 is a graph showing calculation of scattered power collected by a detector with respect to three deep parabolic concave surfaces arranged in a line, three deep parabolic convexes arranged in a line, five deep parabolic concaves arranged in a line, and five deep parabolic convex surfaces arranged in a line;

FIG. 16 is a graph showing a percent increase of the directed reflection performance of the three deep parabolic concave surfaces arranged in a line over that of the three deep parabolic convex surfaces arranged in a line and a percent increase of the directed reflection performance of the five deep parabolic concave surfaces arranged in a line over that of the five deep parabolic convex surfaces arranged in a line;

FIG. 17 illustrates a parabola;

FIG. 18 illustrates reflection dynamics in a cross-section of a deep parabolic concave surface;

FIG. 19 illustrates determination of a detection angle $\delta$;

FIG. 20 illustrates reflection dynamics in a cross-section of a deep parabolic convex surface;

FIG. 21 illustrates a combination of the parabolic concave surface of FIG. 18 and the parabolic convex surface of FIG. 20 to save lost rays, such as a ray 50ac of FIG. 18;

FIGS. 22 through 24 illustrate hybrid reflection surfaces having a height $y_h$ that is equal to 2p, each hybrid reflection surface being obtained by combining a deep parabolic concave surface and a deep parabolic convex surface according to various exemplary embodiments of the present invention;

FIG. 25 is a graph showing calculation of scattered power collected by a detector when a hybrid reflection surface according to an exemplary embodiment of the present invention includes a deep parabolic convex surface that is shifted by a negative value "s";

FIG. 26 is a graph showing calculation of scattered power collected by a detector when a hybrid reflection surface according to an exemplary embodiment of the present invention includes a deep parabolic convex surface that is shifted by a positive value "s";

FIG. 27 is a graph showing the performance improvement in percent when an incidence angle of a ray increased from 0° to 46° at intervals of 2°;

FIG. 28 is a graph showing the performance improvement in percent when an incidence angle of a ray increased from 2° to 46° at intervals of 2°;

FIG. 29 is a graph showing the performance improvement in percent when an incidence angle of a ray increased from 4° to 46° at intervals of 2°; and

FIG. 30 is a graph showing the performance improvement in percent when an incidence angle of a light beam increased from 10° to 46° at intervals of 2°.

## DETAILED DESCRIPTION OF EXEMPLARY EMBODIMENTS OF THE INVENTION

An LCD having a reflection region according to the present invention will now be described more fully hereinafter with reference to the accompanying drawings, in which exemplary embodiments of the invention are shown. In the drawings, the thicknesses of layers and regions are exaggerated for clarity. Like reference numerals in the drawings denote like elements.

FIG. 1 is a cross-sectional view of an LCD according to an exemplary embodiment of the present invention.

Referring to FIG. 1, the LCD according to an exemplary embodiment of the present invention is transreflective. The LCD includes a rear substrate 101, a front substrate 110, an LC layer 107 interposed between the rear substrate 101 and the front substrate 110, and a reflection region 120 disposed on the rear substrate 101. The reflection region 120 reflects incident light from outside to irradiate the reflected light to the LC layer 107 and increases a vertical light component of the reflected light, which is referred to as a y-axis-directional light component provided in the direction of the thickness of the LCD in FIG. 1. FIG. 1 exemplarily illustrates a thin film transistor (TFT) 115 disposed on the rear substrate 101 and a common electrode 108 disposed on the front substrate 110.

In the LCD according to the present exemplary embodiment, a buffer layer 102 having a contact hole 116 is disposed on the rear substrate 101 to partially expose the TFT 115. The buffer layer 102 may be formed of a transparent insulating material. A first medium layer 104 is disposed on the buffer layer 102. The first medium layer 104 is formed to be electrically connected to the TFT 115 through the contact hole 116. In this case, the first medium layer 104 includes an array of hybrid reflection surfaces 103 that form the reflection region 120. That is, the array of the hybrid reflection surfaces 103 is disposed on a surface of the first medium layer 104 opposite the front substrate 110. A second medium layer 106 may planarize the surface of the first medium layer 104 on which the array of the hybrid reflection surfaces 103 is disposed. The second medium layer 106 may be formed of a different transparent material from the first medium layer 104. The LCD according to the present exemplary embodiment may not include the second medium layer 106.

The first medium layer 104 may function as a reflective electrode. Thus, the first medium layer 104 may be formed of a material that can highly reflect light in a desired wavelength range, for example, metal. The first medium layer 104 may be formed of one selected from the group consisting of aluminum (Al), copper (Cu), silver (Ag), and gold (Au). The second medium layer 106 may be formed of a transparent dielectric material, for example, $SiO_2$.

The reflection region 120 includes the array of the hybrid reflection surfaces 103 disposed on the surface of the first medium layer 104 opposite the front substrate 110.

Referring to FIG. 2, the hybrid reflection surface 103 includes a first reflection surface 103a having a convex shape in the center thereof and second reflection surfaces 103b having a spread-out shape disposed adjacent to the first reflection surface 103a.

The first reflection surface 103a may be a convex parabolic surface having a focal length "p". Specifically, a cross section of the first reflection surface 103a may have a convex parabola having a focal length "p".

The second reflection surface 103b has a concave curved surface, which may be a portion of a parabolic concave surface having the focus on the same axis as that of the first reflection surface 103a. For example, when the first reflection surface 103a has a parabolic convex surface having the focal length "p", the second reflection surface 103b may be a portion of a parabolic concave surface having the focus on the same axis as that of the first reflection surface 103a and the same focal length as that of the first reflection surface 103a. The second reflection surface 103b may be disposed at a portion of the hybrid reflection surface 103 except the first reflection surface 103a. In this case, the first and second reflection surfaces 103a and 103b may have the same curvature.

As can be seen from FIGS. 2, 9, and 11, the first and second reflection surfaces 103a and 103b may be 3-dimensional surfaces symmetric with respect to an axis.

As described above, the hybrid reflection surface 103, which is used in the LCD according to the present exemplary embodiment, may be a combination structure of a reflection convex curved surface having a parabolic surface shape and reflection curved surface corresponding to a portion of parabolic concave surface disposed around the reflection convex curved surface.

In this case, the first reflection surface 103a as a parabolic convex surface may have a height equal to or greater or smaller than the focal length "p" thereof. Similarly, the second reflection surface 103b may have a height equal to or greater or smaller than the focal length "p" of a parabolic concave surface formed by imaginarily connecting the second reflection surfaces 103b.

FIG. 2 exemplarily illustrates that the first and second reflection surfaces 103a and 103b of the hybrid reflection surface 103 are formed to have focuses F in the same position and the height (or depth "$y_c$") is equal to the focal lengths "p" thereof.

The hybrid reflection surface 103 of FIG. 2 corresponds that deep parabolic concave and deep parabolic convex having the height (depth) yh=2p are combined such that their focuses F are in the same position, as illustrated in FIG. 22. The height yc of the hybrid reflection surface 103 may be equal to 0.5 yh or p (i.e., yc = 0.5yh = p).

Alternatively, as illustrated in FIGS. 23 and 24, the hybrid reflection surface 103 may be formed such that the focuses F of the first and second reflection surfaces 103a and 103b may be disposed on the same axis but in different positions.

Therefore, assuming that a distance between the focuses F of the first and second reflection surfaces 103a and 103b is "s", the hybrid reflection surface 103 may be formed to satisfy one of s=0, s>0, and s<0 as illustrated in FIGS. 22 through 24.

As can be seen from followings, since the hybrid reflection surface 103 according to the present exemplary embodiment can be formed to a depth equal to, for example, half a depth of a deep parabolic concave surface having a depth greater than a focal length thereof, the hybrid reflection surface 103 can be easily fabricated effectively increased a vertical light component of reflected light.

The principle that the vertical light component of the reflected light is increased due to the reflection region 120 including the array of the hybrid reflection surfaces 103 will be described in detail later.

Meanwhile, the LCD according to the present exemplary embodiment may further include a color filter 109 to display a color image as illustrated in FIG. 1. Although FIG. 1 illustrates that the color filter 109 is prepared on the front substrate 110, the present invention is not limited thereto. For example, the color filter 109 may be prepared between the reflection region 120 and the LC layer 107. When the LCD is used as a monochrome LCD, the color filter 109 may be omitted.

Referring to FIG. 1, the LCD may further include a backlight unit (BLU) 100 disposed behind the rear substrate 101 such that the LCD becomes a transreflective LCD. Thus, the LCD includes not only the reflection region 120 but also a transmission region 130, which allows light irradiated by the BLU 100 to pass therethrough.

As illustrated in FIG. 1, the transmission region 130 may be, for example, in a portion of a region where the TFT 115 is not. In this case, the transmission region 130 may substantially function as a transparent electrode, which is electrically connected to the reflection region 120 serving as the reflective electrode.

The LCD according to the present exemplary embodiment as described above is used as a reflective LCD when an external light source having sufficient luminous intensity exists or in daylight when a sufficient quantity of light is available. In these cases, the LCD does not operate the BLU 100 so that only external incident light 50a is reflected by the reflection region 120 and irradiated to the LC layer 170, thereby the LCD functioning as a reflective LCD.

Without an external light source having sufficient luminous intensity or at night, the LCD according to the exemplary embodiment of the present invention operates the BLU 100 so that the LC layer 170 is irradiated with a light beam 50BLU emitted by the BLU 100. In this case, if an external light exists, not only the light beam 50BLU emitted by the BLU 100 but also the external incident light 50a may be irradiated to the LC layer 170.

FIG. 3 is a cross-sectional view of an LCD according to another exemplary embodiment of the present invention. The LCD of FIG. 3 is configured as a reflective LCD.

Unlike the LCD of FIG. 1, the LCD according to the current exemplary embodiment shown in FIG. 3 may not include the BLU 100 and the transmission region 130 but include a reflection region 120. In this case, the reflection region 120 may be disposed on the entire surface of a rear substrate 101 except a contact hole 116 required for electrically connecting the reflection region 120 to a TFT 115.

Meanwhile, as illustrated in FIGS. 1 and 3 and described in the above exemplary embodiments, the TFT 115 may be on the rear substrate 101 and a transparent common electrode 108 is disposed near the front substrate 110, but the present invention is not limited thereto. In other words, the TFT 115 may be disposed on the front substrate 110, and the common electrode 108 may be disposed on the rear substrate 101. In this case, the buffer layer 102 may be disposed on the entire surface of the rear substrate 101 without forming the contact hole 116 and the common electrode 108 may be disposed thereon. In this case, when the LCD is a transreflective LCD, a layer of the common electrode 108 is formed by media of the first medium layer 104 and a medium of the transmission region 130 of the reflection region 120. Also, when the LCD is a reflective LCD, the common electrode 108 corresponds to the first medium layer 104 of the reflection region 120. The above-described modified exemplary embodiments of the present invention should be clear to one skilled in the art, so they are not shown in the drawings.

Also, it is described above that the LCD according to the present exemplary embodiment includes the TFT 115, but the present invention is not limited thereto. For example, various electrode patterns that can define a pixel region may be used instead of the TFT 115 and thus, the structure of the LCD may be changed. These various modified exemplary embodiments of the present invention should be clear to one skilled in the art, so they are not shown in the drawings.

FIGS. 4 through 6 illustrate various arrangements of the hybrid reflection surfaces 103 of the reflection region 120 used in the LCDs shown in FIGS. 1 and 3, according to exemplary embodiments of the present invention. In FIGS. 4 through 6, reference numeral 103BEV denotes a portion of the reflection region 120. A portion of the reflection region 120 corresponding to a pixel includes a great number of hybrid reflection surfaces 103 arranged as illustrated in FIGS. 4 through 6.

The hybrid reflection surfaces 103 consisting of the reflection region 120 may be regularly arranged as illustrated in FIGS. 4 and 5 or irregularly arranged as illustrated in FIG. 6. FIG. 4 exemplarily illustrates that the hybrid reflection surfaces 103 are regularly arranged to contact one another. FIG. 5 exemplarily illustrates that the hybrid reflection surfaces 103 are regularly arranged and spaced apart from one another. FIG. 6 exemplarily illustrates that the hybrid reflection surfaces 103 are irregularly arranged so that some of the hybrid reflection surfaces 103 are in contact with one another, while the others are spaced apart from one another. When the hybrid reflection surfaces 103 are randomly arranged as illustrated in FIG. 6, an adverse effect caused by wave interference can be reduced. FIG. 7 is a cross-sectional view taken along line VII-VII of FIG. 4, and FIG. 8 is a cross-sectional view taken along line VIII-VIII of FIG. 6.

In FIGS. 1 and 3, it is exemplarily illustrated that the hybrid reflection surfaces 103 are regularly arranged to contact one another as shown in detail in FIG. 4.

Hereinafter, the principle that a vertical component of light that is externally incident and reflected by the reflection region 120 is increased due to the reflection region 120 including the array of the hybrid reflection surfaces 103 will be described.

A reflective LCD operates on the principle that a reflective layer disposed behind the LC layer 107 guides light from an external light source disposed around the LC layer 107, thereby eliminating the necessity to use the BLU 100. In an ideal reflective LCD, a reflection layer may totally reflect all incident light traveling from a light source surrounding the LC layer 107 at an arbitrary incidence angle toward the LC layer 107.

Referring to FIG. 1, in the ideal reflective LCD, a light beam 50st, which is externally incident and reflected by the reflection region 120, may be equal to the light beam 50BLU emitted by the BLU 100. This means that the light beam 50st has only a y-axial light component, i.e., a vertical light component.

In order to maximize the vertical light component of the reflected light beam 50st, the reflection region 120 should be improved to maximize a y-axis light component 50sty of the reflected light beam 50st and minimize an x-axis light component 50stx.

To facilitate the description of the directed reflection performance of the LCD having the foregoing reflection region 120 according to the present exemplary embodiment, contours of known paraboloidal reflective convex and paraboloidal reflective concave will now be analyzed. For a concise and detailed analysis, only sections of the paraboloidal convex and paraboloidal reflective concave surfaces will be considered. Hereinafter, a parabolical convex refers to a section of the paraboloidal convex, and a parabolical concave refers to a section of the paraboloidal concave.

A parabolical convex 103' shown in FIG. 9 is expressed by Equation 1.

$$Y = 2p - \frac{x2}{4p} \qquad (1),$$

wherein "p" is the focal length. In FIG. 9, F is the focus, and the height of the parabolical convex 103' is given by $y_h$=2p.

Similarly, a parabolical concave 103" shown in FIG. 10 is expressed by Equation 2.

$$y = \frac{x2}{4p} \quad (2),$$

wherein "p" is the focal length. In FIG. 10, F is the focus, and the height of the parabolical convex 103" is given by $y_h$=2p.

The parabolical convex 103' having a height $y_h$ smaller than or equal to the focal length "p" is called a shallow parabolical convex, and the parabolical concave 103" having a height $y_h$ smaller than or equal to the focal length "p" is called a shallow parabolical concave. Inversely, the parabolical convex 103' having a height $y_h$ greater than the focal length "p" may be considered as a deep parabolical convex, and the parabolical concave 103" having a height $y_h$ greater than the focal length "p" may be considered as a deep parabolical concave. Thus, the parabolical convex 103' of FIG. 9 is a deep parabolical convex, and the parabolical concave 103" of FIG. 10 is a deep parabolical concave.

In order to calculate to obtain the reflection performance comparison of two contours, i.e., the parabolical convex 103' and that of the parabolic concave 103", three deep parabolical convexes 103' as shown in FIG. 9 are arranged in a line as shown in FIG. 11, and three deep parabolical concaves 103" as shown in FIG. 10 are arranged in a line as shown in FIG. 12. The reason for arranging three deep parabolical convexes or three deep parabolical concaves in a line is clear in FIG. 11.

Specifically, when a single parabolical convex 103' is simulated for reflection, assuming that a detector (not shown) is disposed somewhere along a y-axis and rays, such as 50ap and 50am of FIG. 11, cannot reach the detector.

Therefore, in a device using a function of a reflective LCD, a reflective layer should not be composed of single parabolical convex 103' and should include a cluster of a plurality of parabolical convexes 103' serving as a single unit. In a structure including the cluster of a plurality of parabolical convexes 103' to be a single unit, the foregoing rays 50ap and 50am may be reflected by the surface of a neighboring parabolical convex 103' so that reflected rays travel in a y-axis direction unlike in a structure including single an isolated parabolical convex. Assuming that the detector is disposed somewhere in the y-axis direction, the reflected rays can be advantageous to improving reflection performance.

The three parabolical concaves 103" or three parabolical convexes 103' arranged in a line sufficiently contain all possible reflecting effects. When comparing the reflectance of the three parabolical concaves or convexes arranged in a line with that of five parabolical concavees or convexes arranged in a line, the reflectance of the five parabolical concaves or convexes is better than that of the three parabolical concaves or convexes simply because of an increased area, but the other characteristics are substantially the same.

In determining performance of a reflector, since the detector is disposed at a predetermined distance from a reflector, the performance of the reflector is determined by the number of rays that can be reflected by the reflector and reach the detector.

A simulation was conducted assuming that an apparatus for measuring the performance of the reflector is as illustrated in FIG. 13. The light beam 50a is incident on a reflector 103u at an incidence angle $\Omega$. Then, the incident light beam 50a is reflected by the reflector 103u and becomes the resulting reflected light beam 50st. The detector, which is spaced 1 meter apart from the reflector 103u in a y-axis direction, is used to detect only the light beam 50st, which is reflected at a reflection angle less than or equal to a detection angle range $\delta°$.

For example, when the detector is the human eye, the detection angle range $\delta°$ may be a factor associated with the size of the eye. In FIG. 13, a magnified view of a parabolic concave section is added only for purposes of illustration.

In the measuring apparatus shown in FIG. 13, scattered power collected within the range $\delta°$, which is equal to half the width of a window, was calculated using a finite difference time domain (FDTD) method. The FDTD calculation was made using software available from Lumerical Solutions, Inc., (Suite 660-789 West Pender Street, Vancouver, British Columbia, V6C1 H2, Canada). All the FDTD calculation was made assuming that a reflection surface was formed of aluminum (Al) and a medium for incident light beam 50a and reflected light beam 50st had a refractive index equal to that of vacuum (i.e., equal to 1). Also, all the calculation process was performed using plane wave beam and transverse-electric (TE)-mode polarization. Furthermore, all the FDTD calculation was made assuming that an incident light beam 50a had a wavelength of 550 nanometers (nm) in vacuum, and a focal length "p" of each of a parabolical convex and a parabolic concave was 2$\mu$m. The scattered power calculated at the far field was detected 1 meter apart from a scatterer 105.

FIG. 14 is a graph showing a FDTD calculation result of scattered power collected by a detector located 1 meter apart from a reflector in a y-axis direction. When making the FDTD calculation on three deep parabolical convexes arranged in a line and three deep parabolical concaves arranged in a line, the height $y_h$ of each of the deep parabolical convexes and deep parabolical concave was greater than the focal length "p" thereof, and it can be seen that the directed reflection performance of the three deep parabolical concaves arranged in the line was better by 72% than that of the three deep parabolical convexes arranged in the line. The question of whether or not a structure including three parabolical convexes or concaves is suitable for considering all physical effects in measuring directed reflectance will now be answered by analyzing the graph shown in FIG. 15. The increased power of the structure including five deep parabolical convexes or concaves arranged in a line as compared with a structure including three deep parabolic convexes or concaves arranged in a line is due to an increased area for reflection. This can be seen from FIG. 16. FIG. 16 shows a first percent increase value of the directed reflection performance of the three deep parabolical concaves arranged in the line over that of the three deep parabolical convexes arranged in the line and a second percent increase value of the directed reflection performance of five deep parabolical concaves arranged in a line over that of the directed reflection performance of five deep parabolical convexes arranged in a line. The first percent increase value was approximately 71.94, and the second percent increase value was approximately 70.79. Thus, the first percent increase value is almost equal to the second percent increase value ($71.94 \approx 70.79$)

FIG. 14 is a graph of results of a comparison of the three deep parabolical concaves arranged in the line and the three deep parabolical convexes arranged in the line, which shows the calculation of scattered power collected by the detector. FIG. 15 is a graph of results of a comparison of the five deep parabolical concave arranged in a line and the five deep parabolical convexes arranged in a line, which shows the calculation of scattered power collected by the detector. Also, FIG. 16 is graph of calculation results of a percent increase of the directed reflection performance of the three deep parabolical concaves arranged in the line over that of the three deep parabolical convexes arranged in the line and a percent increase of the directed reflection performance of the five deep parabolical concaves arranged in the line over that of the five deep parabolical convexes arranged in the line when each of the deep parabolical concaves had a depth of 4μm and each of the deep parabolical convexes had a height of 4μm.

It can be understood based on the principal characteristics of a parabola that the deep parabolical concave structure is exhibited better directed reflectance than the deep parabolical convex structure.

For simplicity, a parabola shown in FIG. 17 will now be considered. Referring to FIG. 17, a ray from a focus F is reflected by the parabola in a direction parallel to an axis on which the focus F is disposed. In FIG. 17, a line L is tangent to the parabola, a point F is the focus, and a ray AL' is parallel to an x-axis that is an axis of the parabola. The Line L makes an angle $\alpha$ to be equal to an angle $\beta$ so that a certain ray from the focus F is reflected at a point A along a segment AL' and a certain ray traveling along the segment AL' is reflected toward the focus F.

Referring to FIG. 18, which illustrates reflex dynamics in a cross-section of the deep parabolical concave 103", initial incident parallel rays 50ay, 50ac, and 50ag, which are parallel to a y-axis that is a parabolic axis, are finally reflected by the parabolical concave 103" and focused on the parabolic focus F. The reflected rays 50ay, 50ac, and 50ag pass through the focus F. Thereafter, the rays 50ay and 50ag are respectively reflected by opposite end portions of an inner surface of the deep parabolical concave 103" and travel in a y-axis direction. However, the ray 50ac travels infinitely because there is no surface to reflect the ray 50ac. For this reason, the ray 50ac is lost.

Substantially, as the height (or depth) $y_h$ of the parabolical concave 103" increases, the directed reflection performance of the parabolical concave 103" greatly improves. This reason is apparent from FIG. 18. Among the initial incident rays 50ay, 50ac, and 50ag, which are parallel to the y-axis that is the parabolic axis, the rays 50ay and 50ag reflected by points on the surface of the parabolical concave 103" defined by $\Delta 1$ and $\Delta 3$ travel only in the y-axis direction. This means that the reflected rays 50ay and 50ag do not have any x-axis light components. Meanwhile, the ray 50ac, which is reflected by a point on an inner surface of the parabolical concave 103" defined by $\Delta 2$, includes both x- and y-axis light components. Since the detector is spaced 1 meter apart from the surface of the parabolical concave 103" in the y-axis direction, the detected angle $\delta$ is expressed by Equation 3.

$$\delta = \arctan(\frac{\gamma}{\zeta}) \quad (3),$$

wherein $\zeta$ denotes a distance between the reflection surface of the parabolical concave 103" and the detector, and $\gamma$ denotes the width of the detector. When the pupil of the human eye is taken as a physical detector, the width $\gamma$ is about 1 cm. Since the detector is spaced 1 meter apart from the reflection surface of the parabolical concave 103", $\zeta$ is equal to 1 m. Thus, it can be concluded that $\gamma << \zeta$. The detection angle $\delta$ for obtaining high accuracy is expressed by Equation 4.

$$\delta = \arctan(\frac{\gamma}{\zeta}) \cong \arctan(0.01) = 0.57294 \quad (4),$$

On the other hand, when the detector is spaced apart from the reflection surface by the arm' length, i.e., about 0.5 meter, the detection angle 5 becomes $\delta \cong \arctan(0.02) = 1.1458°$. When the detection angle 5 is small, this suggests that a certain x-axis light component of a reflected ray is very slight or hardly reaches the detector. Of course, in order to enhance the entire directed reflection performance, it is possible that the height (or depth) $y_h$ of the parabolical concave 103" is increased to reduce an area covered by $\Delta 2$ of FIG. 18 and increase an area covered by $\Delta 1$. However, it is difficult to form such a deep parabolical concave in the range of micrometers, so that more stress may be applied to a fabrication process.

Therefore, the exemplary embodiment of the present invention provides new approaches to reduce the height of a deep parabolical concave to improve the directed reflection performance and facilitate a fabrication process.

For example, the lost ray 50ac of FIG. 18 may be used. By increasing the height $y_h$ of the deep parabolical concave 103", the ray 50ac may be prevented from infinitely traveling. Alternatively, as illustrated in FIG. 20, the potential advantages of a deep parabolical convex may be taken to prevent the ray 50ac from being lost in the infinite space. Furthermore, when the deep parabolical concave 103" of FIG. 18 and the deep parabolical convex of FIG. 20 are combined into a hybrid structure as illustrated in FIG. 21, the ray 50ac can be reflected along a y^-axis, so that the directed reflection performance can be enhanced.

When each of the deep parabolical concave and the deep parabolical convex has a height $y_h$ equal to 2p, the hybrid structure may be as illustrated in FIGS. 2, 22, 23, and 24.

FIGS. 22 through 24 illustrate hybrid reflection surfaces structures being obtained by combining a deep parabolical concave and a deep parabolical convex having a height $y_h$ equal to 2p according to various exemplary embodiments of the present invention. More specifically, FIG. 22 shows a mathematical function of a section of a hybrid reflection surface structure when a focus of a deep parabolical concave is identical to a focus of a deep parabolical convex according to an exemplary embodiment of the present invention. FIG. 23 shows a mathematical function of a section of a hybrid reflection surface structure when a deep parabolical convex is shifted by a positive value "s" according to another exemplary embodiment of the present invention. Also, FIG. 24 shows a mathematical function of a section of a hybrid reflection surface structure when a deep parabolical convex is shifted by a negative value "s" according to yet another exemplary embodiment of the present invention.

As illustrated in FIGS. 22 through 24, when a vertex (or the lowest point) of the parabolical concave is seen as the origin (x=0, y=0) of the coordinates, the parabolical concave having the focal length "p" is expressed by the foregoing Equation 2, and the parabolical convex having a focal length "p" is expressed by Equations 5 through 7.

Referring to FIG. 22, when the two focuses F of the parabolical concave and the parabolical convex are identical in the hybrid structure, the height of each of the parabolical concave and the parabolical convex can be $y_c = 0.5\ y_h = p$. In this case, the parabolical convex is expressed by Equation 5.

$$y = 2p + s - \frac{X^2}{4p}; s = 0 \quad (5),$$

wherein "s" is a distance between the two focuses F. Since the two focuses F are identical, "s" becomes 0.

Referring to FIG. 23, the parabolical convex is shifted in a positive direction such that the two focuses F are spaced a distance "s" apart from each other. Thus, a distance between two vertexes, i.e., the lowest point of the parabolical concave and the highest point of the parabolical convex, becomes greater than 2p. In this case, the parabolic convex surface is expressed by Equation 6.

$$y = 2p + s - \frac{X^2}{4p}; s > 0 \quad (6),$$

Referring to FIG. 24, the parabolical convex is shifted in a negative direction such that the two focuses F are spaced a distance "s" apart from each other. Thus, a distance between two vertexes, i.e., the lowest point of the parabolical concave and the highest point of the parabolical convex, becomes smaller than 2p. In this case, the parabolical convex is expressed by Equation 7.

$$y = 2p + s - \frac{X^2}{4p}; s < 0 \quad (7),$$

As described above, in the LCD according to the exemplary embodiment of the present invention, the reflection region 120 may include the array of the hybrid reflection surfaces 103, each hybrid reflection surface being obtained by combining the parabolical concave and the parabolical convex. When "s" is a distance between the focuses F of the parabolical concave and the parabolical convex, the reflection surface 120 may satisfy one of s = 0, s > 0, and s < 0 as illustrated in FIGS. 22 through 24.

The above-described hybrid structure offsets the potential disadvantages of both the deep parabolical concave and the deep parabolical convex. The directed reflection performance of the deep parabolical concave structure, which is calculated as illustrated in FIG. 15, rapidly deteriorates with the increase of an incidence angle. However, the directed reflection performance of the deep parabolical convex structure remains relatively unchanged with respect to an incidence angle.

Therefore, by combining the deep parabolical concave with the deep parabolical convex, the deterioration of performance of the parabolical concave at a large incidence angle can be compensated.

As a result, according to the LCD of the exemplary embodiment of the present invention, since the reflection region 120 includes the array of the hybrid reflection surfaces 103, each of which being obtained by combining the parabolical concave with the parabolical convex, the directed reflection performance of the reflection region 120 can be markedly improved. In this case, when "s" is a distance between the focuses F of the parabolical concave and the parabolical convex that form the first reflection surface 103a and the second reflection surface 103b, respectively, the hybrid reflection surface 103 may satisfy one of s = 0, s > 0, and s < 0 as illustrated in FIGS. 22 through 24.

Hereinafter, the directed reflection performance of the hybrid reflection surface 103 shown in FIG. 2 according to the exemplary embodiment of the present invention will be compared with that of each of the parabolical convex and the parabolical concave shown in FIGS. 9 and 10, respectively.

In the exemplary embodiment of the present invention, a simulation was conducted using the array of FIG. 7 in which three hybrid reflection surfaces 103 contact one another. While varying an incidence angle Ω of an incident ray 50a from 0° to 46° at intervals of 2°, scattered power collected by a detector was calculated as shown in FIGS. 25 and 26. FIG. 25 is a graph showing calculation of scattered power collected by the detector when the hybrid reflection surface 103 includes the deep parabolical convex that is shifted by a negative value "s" (s < 0). FIG. 26 is a graph showing calculation of scattered power collected by the detector when the hybrid reflection surface 103 includes the deep parabolical convex that is shifted by a positive value "s" (s > 0).

The calculation results of FIGS. 25 and 26 were obtained using scattered rays 50st having a reflection angle less than or equal to a detection angle δ. In this case, the detection angle δ was 2.5°, the medium was vacuum, and the hybrid reflection surface 103 was formed of aluminum. Also, a distance "s" between the two focuses F was increased from -1.75μm to 1.75μm at intervals of 0.25μm. The type of incident beams 50a, polarization, and wavelength are the same as FIGS. 14 and 15.

FIGS. 27 through 30 show percent increases of the performance of a hybrid reflection surface according to the exemplary embodiment of the present invention over that of a deep parabolical convex, which were obtained by analyzing the results of FIGS. 25 and 26.

FIG. 27 is a graph showing a percent increase in directed reflection performance when an incidence angle of the ray 50a increased from 0° to 46° at intervals of 2°.

FIG. 28 is a graph showing a percent increase in directed reflection performance when the incidence angle of the ray 50a increased from 2° to 46° at intervals of 2°.

FIG. 29 is a graph showing a percent increase in directed reflection performance when the incidence angle of the ray 50a increased from 4° to 46° at intervals of 2°.

FIG. 30 is a graph showing a percent increase in directed reflection performance when the incidence angle of the ray 50a increased from 10° to 46° at intervals of 2°.

In FIGS. 27 through 30, the percent increase was obtained by comparing the directed reflection performance of the hybrid reflection surface 103 according to the exemplary embodiment of the present invention with that of the three deep parabolical convex 103' arranged in the line as shown in FIG. 11. In FIGS. 27 through 30, it is clear that the directed reflection performance of the deep parabolical convex 103' is 0. In order to compare the directed reflection performance of the hybrid reflection surface 103 according to the exemplary embodiment of the present invention with that of a deep parabolical concave reflector, a percent increase of the performance of the directed reflection of the deep parabolical concave 103" (refer to FIG. 12) over that of the equivalent deep parabolical convex 103' was also included in the results of FIGS. 27 through 30.

When the incidence angle of the incident ray varied from 0° to 46°, a percent increase of the directed reflection performance of the hybrid reflection surface 103 according to the exemplary embodiment of the present invention over that of the deep parabolical convex was 64%, 47%, and 49% when the distance "s" between two focuses F was -1.0μm, -1.25μm, and -1.5μm, respectively. A percent increase of the directed reflection performance of the deep parabolical concave 103" over that of the equivalent deep parabolical convex was 72% in the same case. In the exemplary embodiment of the present invention, the height (or depth) of the hybrid reflection surface 103 satisfies $y_c < y_h$. Here, $y_h$ is the height of the deep parabolical concave or the deep parabolical convex.

When the incidence angle of the incident ray 50a increased from 2° to 46°, a percent increase of the directed reflection performance of the hybrid reflection surface 103 according to the exemplary embodiment of the present invention over that of the deep parabolical convex surface was 60%, 51%, and 50% when the distance "s" between two focuses F was -1.0μm, -1.25μm, and -1.5μm, respectively. A percent increase of the directed reflection performance of the deep parabolical concave over that of the equivalent deep parabolical convex was 46% in the same case.

When the incidence angle of the incident ray increased from 4° to 46°, a percent increase of the directed reflection performance of the hybrid reflection surface 103 according to the exemplary embodiment of the present invention over that of the deep parabolical convex was 66%, 59%, and 56% when the distance "s" between two focuses F was -1.0μm, -1.25μm, and -1.5μm, respectively. A percent increase of the directed reflection performance of the deep parabolic concave over that of the equivalent deep parabolical convex was only 11 % in the same case.

Substantially, when an LCD is operated by a user, it is almost impossible that external light is incident on the LCD at an incidence angle of 0°. Therefore, when considering the case where the incidence angle of the ray increased from 2° to 46° and the case where the incidence angle of the ray increased from 4° to 46°, it was determined that directed reflection performance of the hybrid reflection surface 103 according to the exemplary embodiment of the present invention is higher than not only that of the deep parabolical convex reflection structure but also that of the deep parabolical concave reflection structure.

To sum up, the hybrid reflection surface 103 obtained by combining a deep parabolic concave reflection structure and a deep parabolical convex reflection structure according to the exemplary embodiment of the present invention can exhibit even better performance than not only the deep parabolical concave reflection structure but also the deep parabolical convex reflection structure.

Meanwhile, it is exemplarily described above that a portion of a parabolic concave surface is used as the second reflection surface 103b of the hybrid reflection surface 103 according to the exemplary embodiment of the present invention. However, the present invention is not limited thereto and the second reflection surface 103b may have other various spread-out shapes. In this case, the directed reflection performance of the hybrid reflection surface 103 can be greatly improved in the same manner.

In the LCD according to the exemplary embodiment of the present invention as described above, a reflection region includes an array of hybrid reflection surfaces, each hybrid reflection surface including a first reflection surface having a convex curved surface shape in the center thereof and second reflection surface having a spread-out shape disposed around the first reflection surface. In this structure, a vertical light component of light that is externally incident on an LC panel and reflected by the reflection region can be greatly increased.

Particularly, since the hybrid reflection surface can be shallowly formed to a depth equal to, for example, half a depth of a deep parabolic concave surface having a depth greater than a focal length thereof, the reflection region can be easily fabricated and the vertical light component of reflected light can be effectively increased.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A liquid crystal display (LCD) comprising:

    a rear substrate;
    a front substrate;
    a liquid crystal (LC) layer interposed between the rear substrate and the front substrate; and
    a reflection region, disposed on at least a portion of a surface of the rear substrate disposed opposite the LC layer, which reflects external light to the LC layer, wherein the reflection region comprises an array of hybrid reflection surfaces, wherein each hybrid reflection surface comprises a first reflection surface having a convex curved surface shape in a center thereof, and second reflection surfaces having a spread-out shape around the first reflection surface.

2. The LCD of claim 1, wherein the first reflection surface is a parabolic convex surface having a parabolic section.

3. The LCD of claim 2, wherein the second reflection surface is a concave curved surface.

4. The LCD of claim 2, wherein the second reflection surface is a portion of a parabolic concave surface.

5. The LCD of claim 4, wherein the first and second reflection surfaces have equal curvature.

6. The LCD of claim 4 or 5, wherein the second reflection surface is a portion of a parabolic concave surface having a focus on a same axis as the first reflection surface and an equal focal length as the first reflection surface,

    wherein the second reflection surface is disposed in a region except for the first reflection surface of the hybrid reflection surface.

7. The LCD of claim 6, wherein the first and second reflection surfaces are 3-dimensional surfaces symmetric with respect to an axis.

8. The LCD of claim 6 or 7, wherein when a distance between the focuses of the first and second reflection surfaces is s, the hybrid reflection surface satisfies one of s=0, s>0, and s<0.

9. The LCD of any preceding claim, wherein the second reflection surface is a concave curved surface.

10. The LCD of any preceding claim, further comprising a first medium layer disposed on the rear substrate and having a surface opposite the front substrate on which the array of the hybrid reflection surfaces is disposed.

11. The LCD of claim 10, wherein the first medium layer comprises a metal.

12. The LCD of claim 10 or 11, further comprising a second medium layer which planarizes the surface of the first medium layer on which the array of the hybrid reflection surfaces is disposed,

    wherein the second medium layer comprises a different material from the first medium layer.

13. The LCD of claim 12, wherein the second medium layer comprises a transparent dielectric material.

14. The LCD of any preceding claim, wherein the hybrid reflection surfaces are regularly arranged to be spaced apart from one another.

15. The LCD of any preceding claim, wherein the hybrid reflection surfaces are irregularly arranged so that some of the hybrid reflection surfaces contact one another, while others are spaced apart from one another.

16. The LCD of any preceding claim, further comprising:

    a backlight unit disposed behind the rear substrate; and
    a transmission region for transmitting light irradiated by the backlight unit toward the LC layer and which is a trans-reflective LCD.

17. The LCD of claim 16, further comprising a color filter disposed on the front substrate.

18. The LCD of any preceding claim, wherein the LCD is a reflective LCD.

**19.** The LCD of claim 18, further comprising a color filter disposed on the front substrate.

FIG. 1

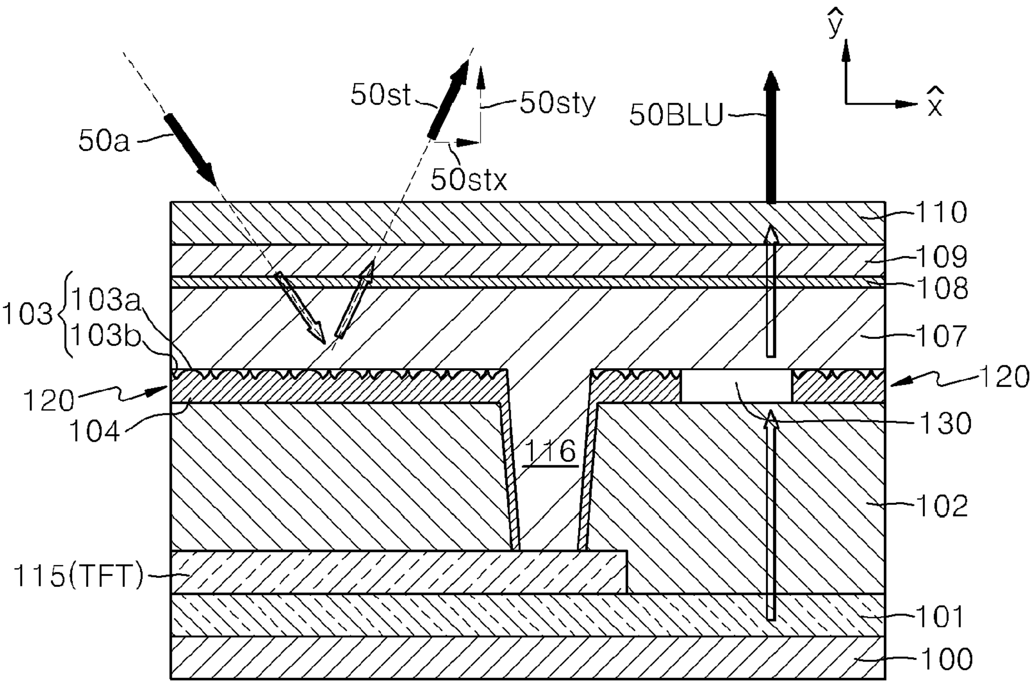
50a
50st
50sty
50stx
50BLU
ŷ
x̂
110
109
108
107
103
103a
103b
120
104
116
130
102
115(TFT)
101
100

FIG. 2

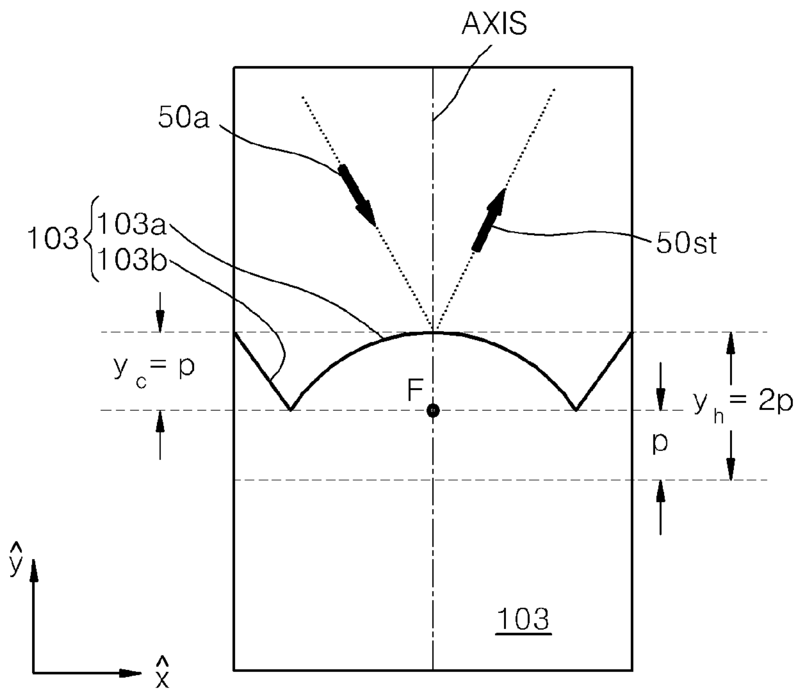
AXIS
50a
50st
103
103a
103b
y c = p
F
y h = 2p
p
ŷ
x̂

FIG. 3

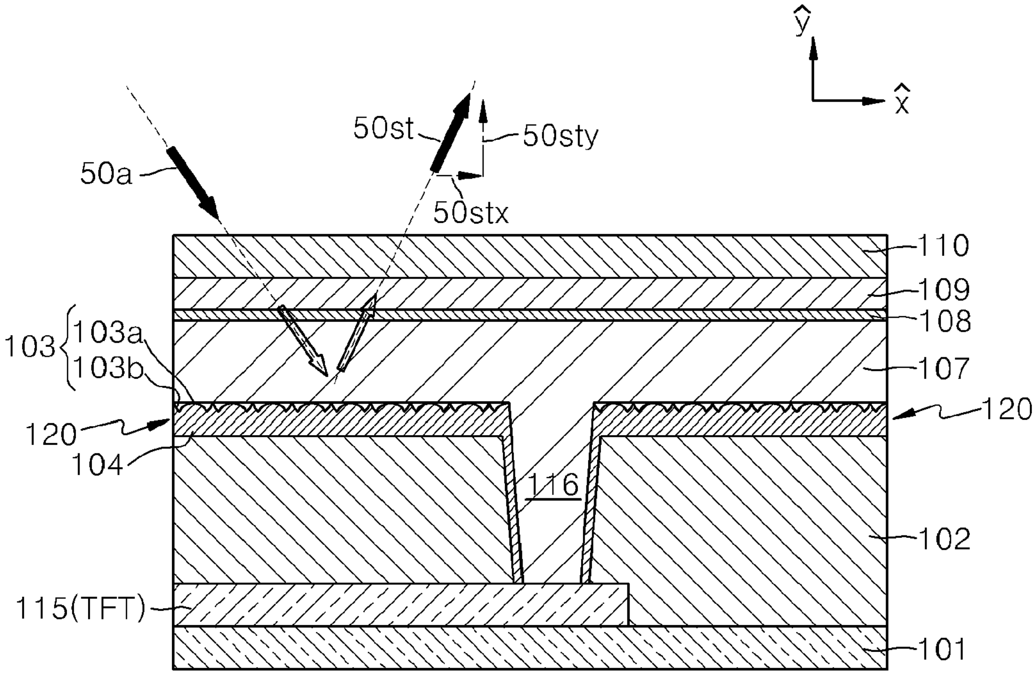
ŷ
x̂
50a
50st
50sty
50stx
110
109
108
107
103
103a
103b
120
104
116
102
115(TFT)
101
120

FIG. 4

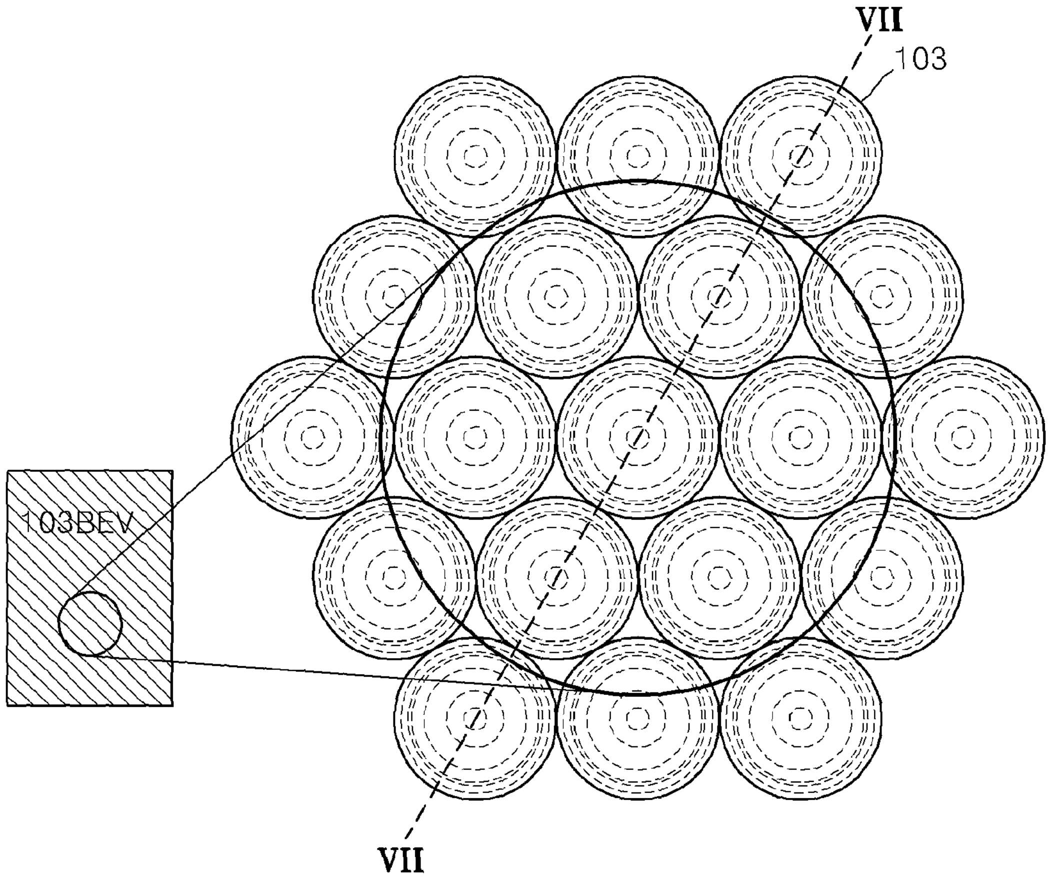

FIG. 5

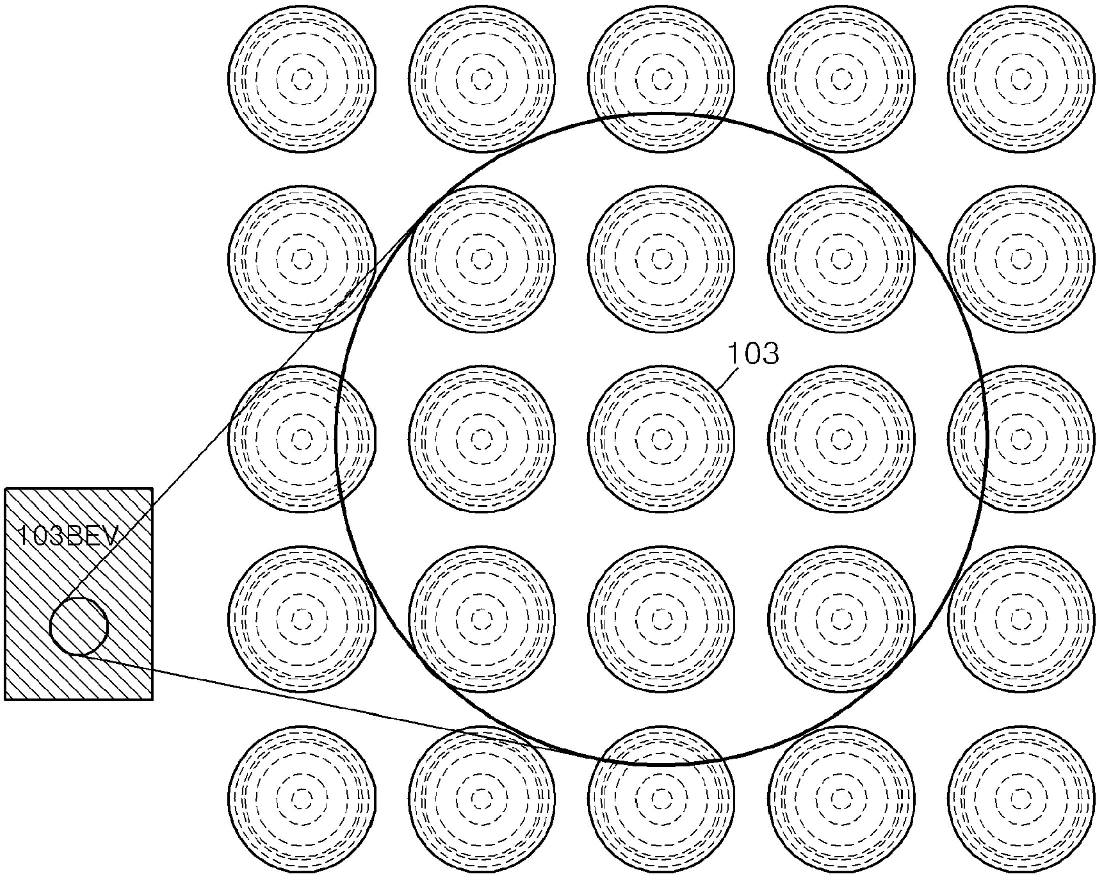

FIG. 6

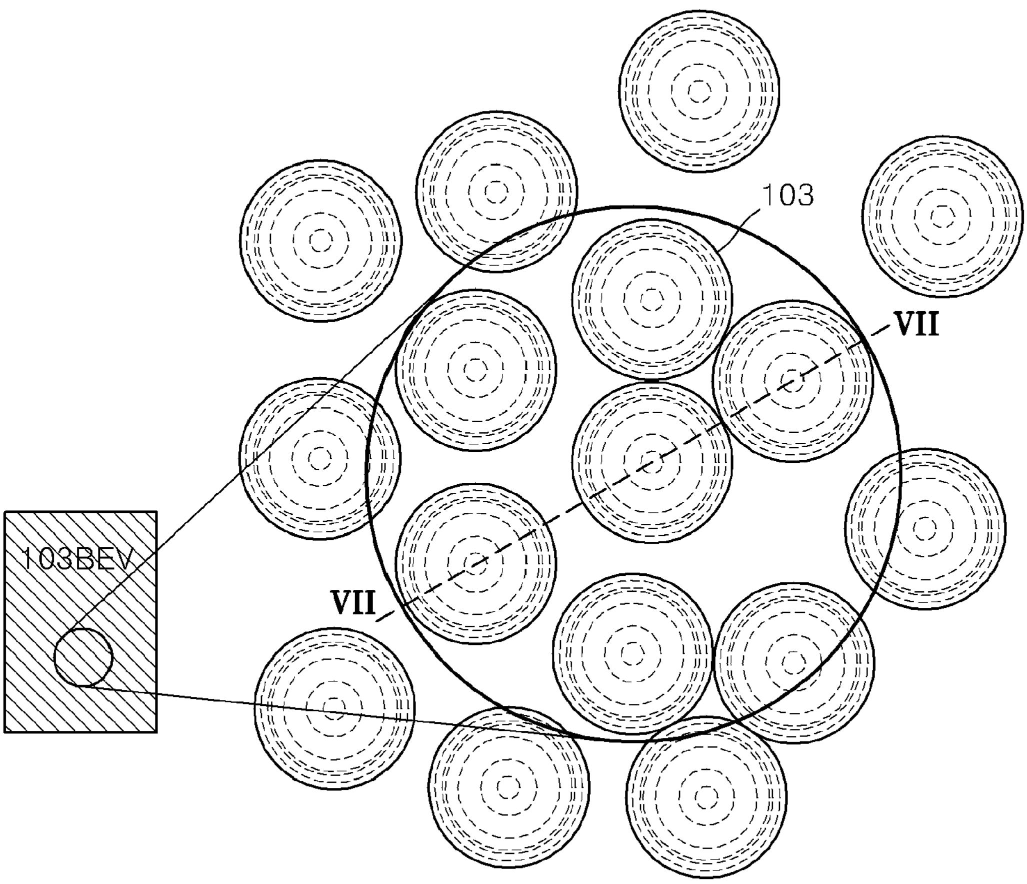

FIG. 7

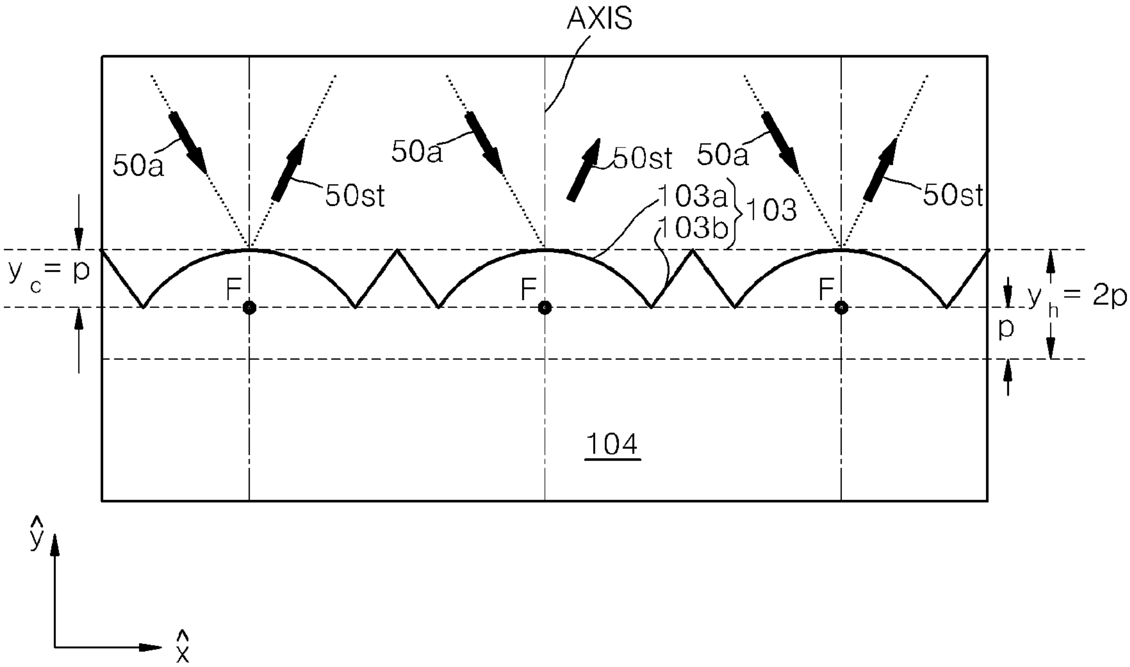
AXIS
50a
50st
50a
50st
50a
50st
103a
103b
103
y c = p
F
F
F
y h = 2p
p
104
ŷ
x̂

FIG. 8

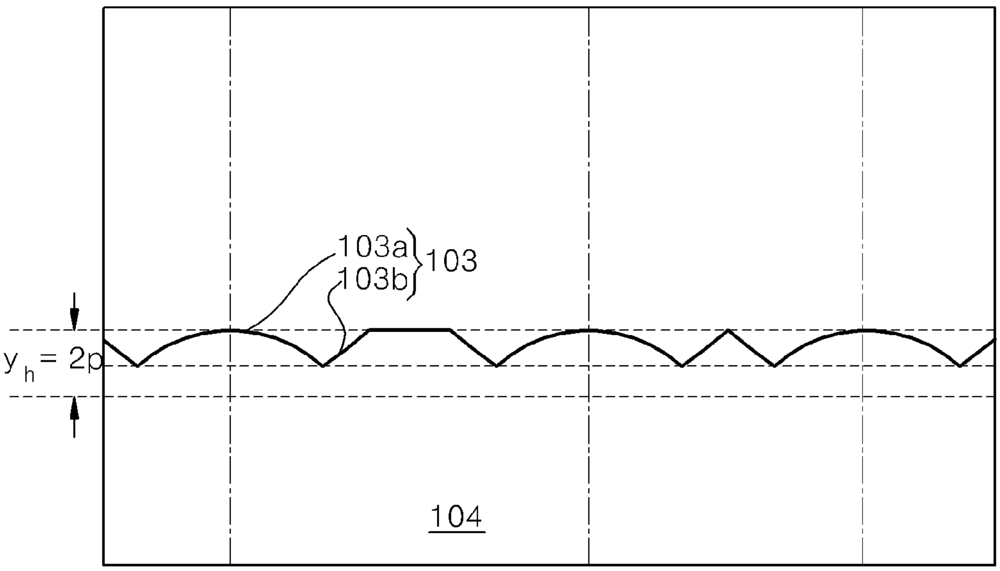
103a
103b
103
y h = 2p
104

FIG. 9

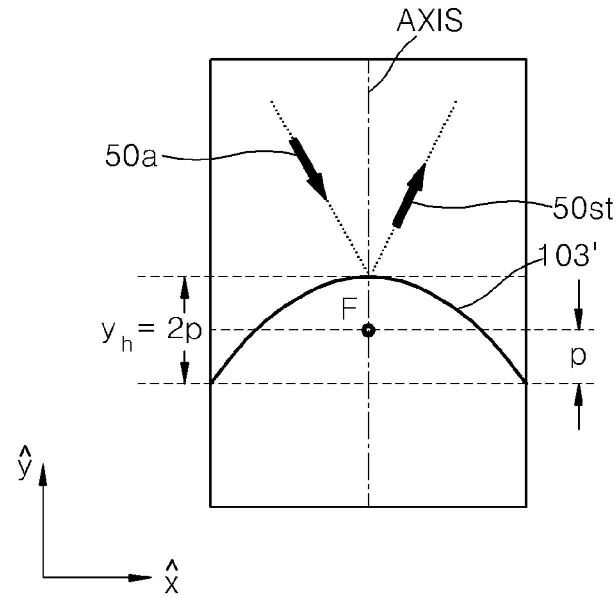


FIG. 10

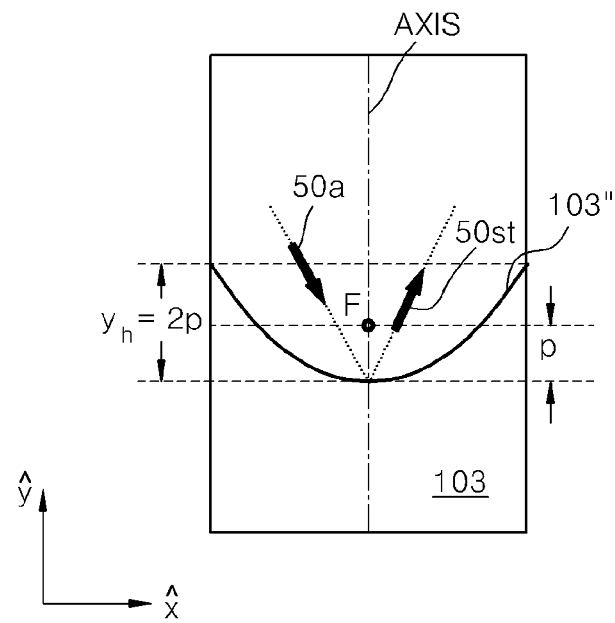

# FIG. 11

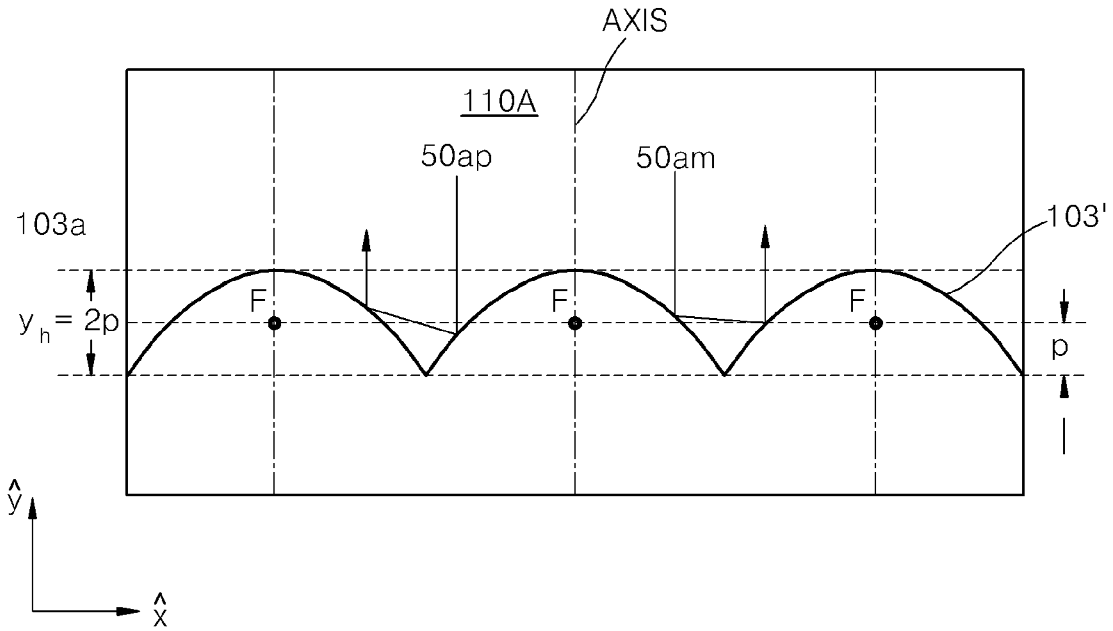
AXIS
110A
50ap
50am
103a
103'
F
F
F
$y_h = 2p$
p
ŷ
x̂

# FIG. 12

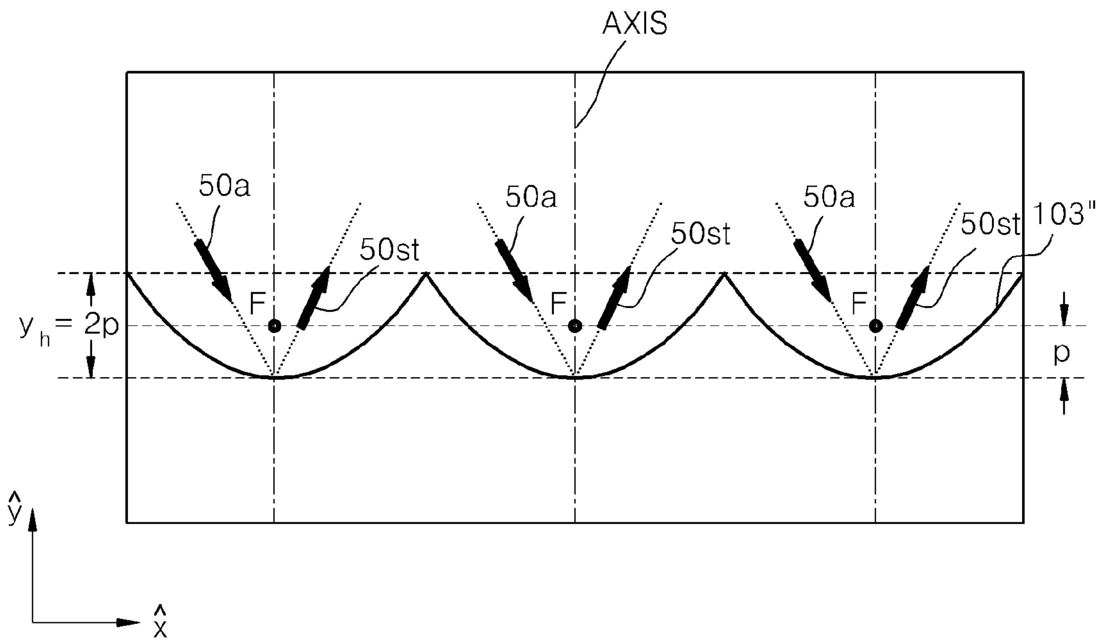
AXIS
50a
50a
50a
50st
50st
50st
103"
F
F
F
$y_h = 2p$
p
ŷ
x̂

FIG. 13

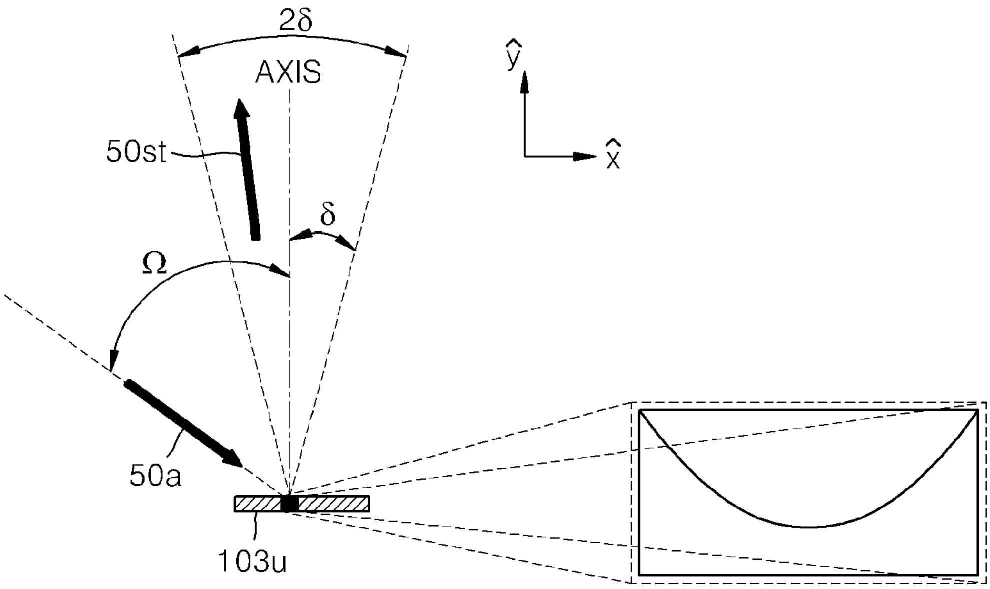

FIG. 14

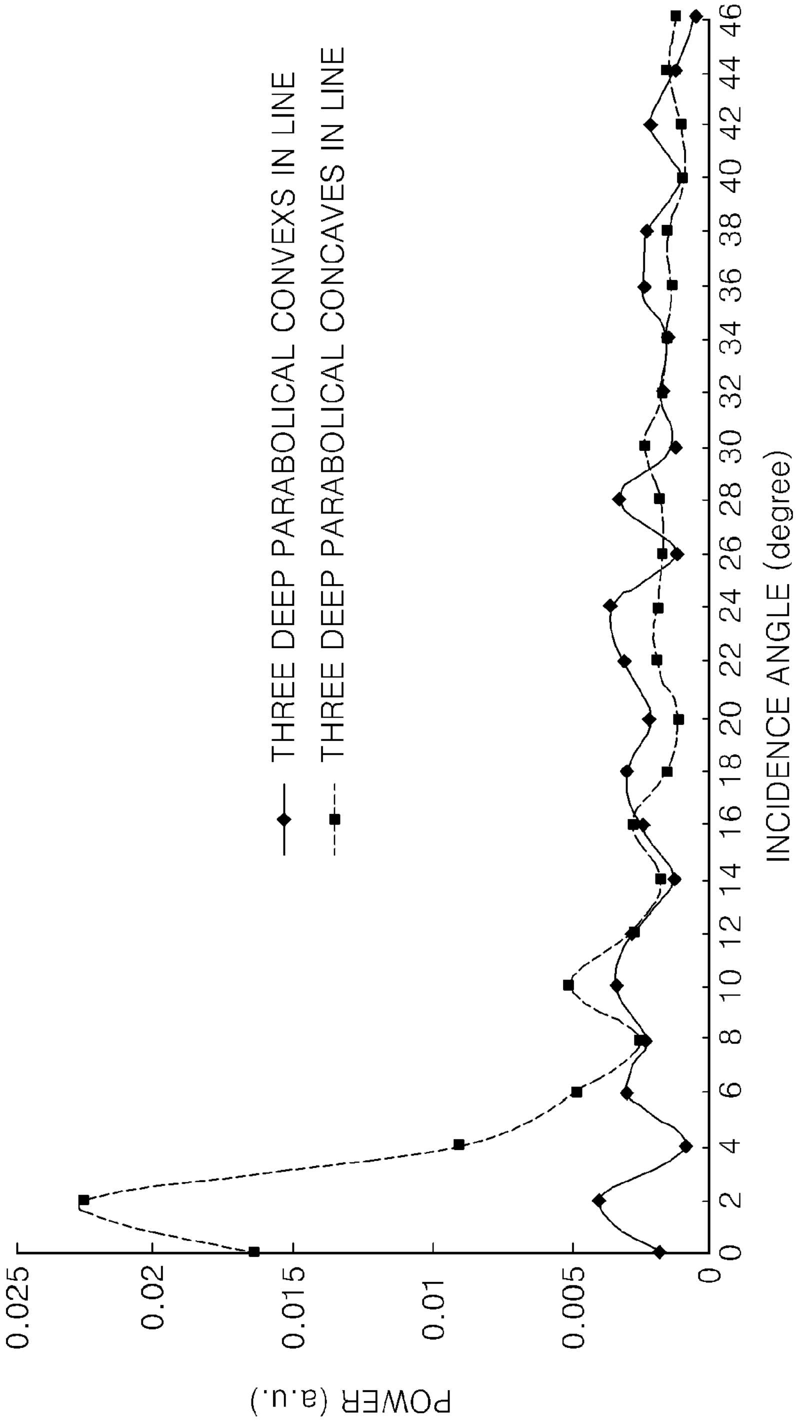
THREE DEEP PARABOLICAL CONVEXS IN LINE
THREE DEEP PARABOLICAL CONCAVES IN LINE
POWER (a.u.)
0.025
0.02
0.015
0.01
0.005
0
0 2 4 6 8 10 12 14 16 18 20 22 24 26 28 30 32 34 36 38 40 42 44 46
INCIDENCE ANGLE (degree)

FIG. 15

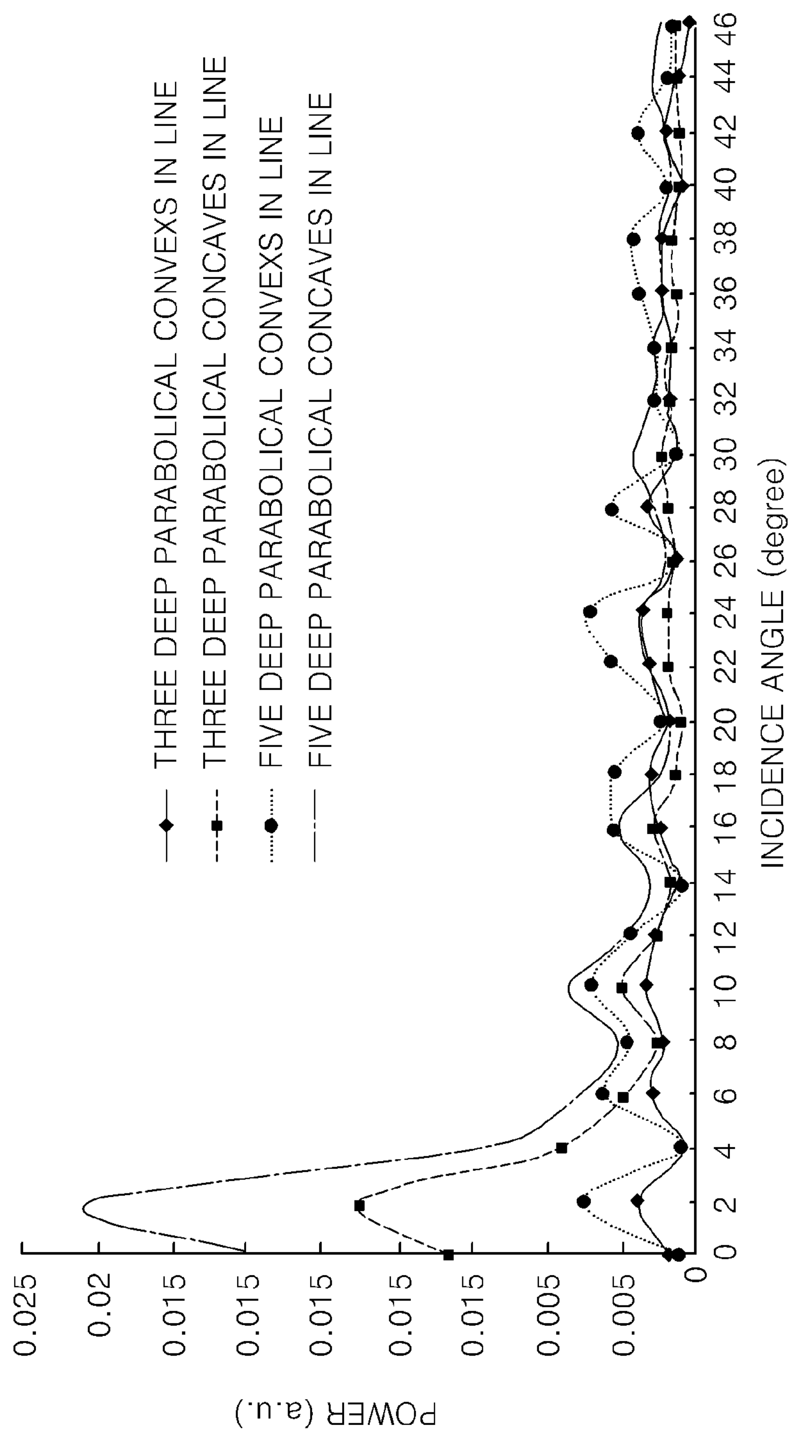
THREE DEEP PARABOLICAL CONVEXS IN LINE
THREE DEEP PARABOLICAL CONCAVES IN LINE
FIVE DEEP PARABOLICAL CONVEXS IN LINE
FIVE DEEP PARABOLICAL CONCAVES IN LINE
POWER (a.u.)
0.025
0.02
0.015
0.015
0.015
0.015
0.015
0.005
0.005
0
INCIDENCE ANGLE (degree)
0 2 4 6 8 10 12 14 16 18 20 22 24 26 28 30 32 34 36 38 40 42 44 46

FIG. 16

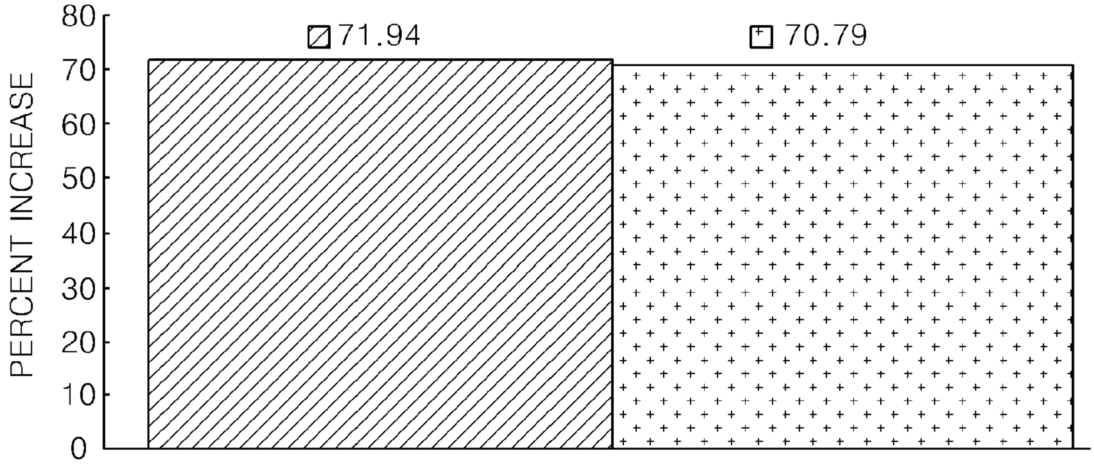


PERCENT INCREASE VALUE OF THREE DEEP PARABOLICAL CONCAVES IN LINE OVER THAT OF THREE DEEP PARABOLICAL CONVEXS IN LINE

PERCENT INCREASE VALUE OF FIVE DEEP PARABOLICAL CONCAVES IN LINE OVER THAT OF FIVE DEEP PARABOLICAL CONVEXS IN LINE

FIG. 17

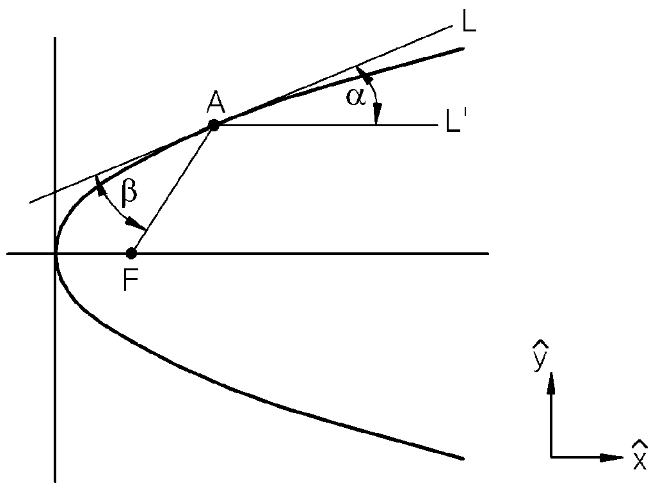

FIG. 18

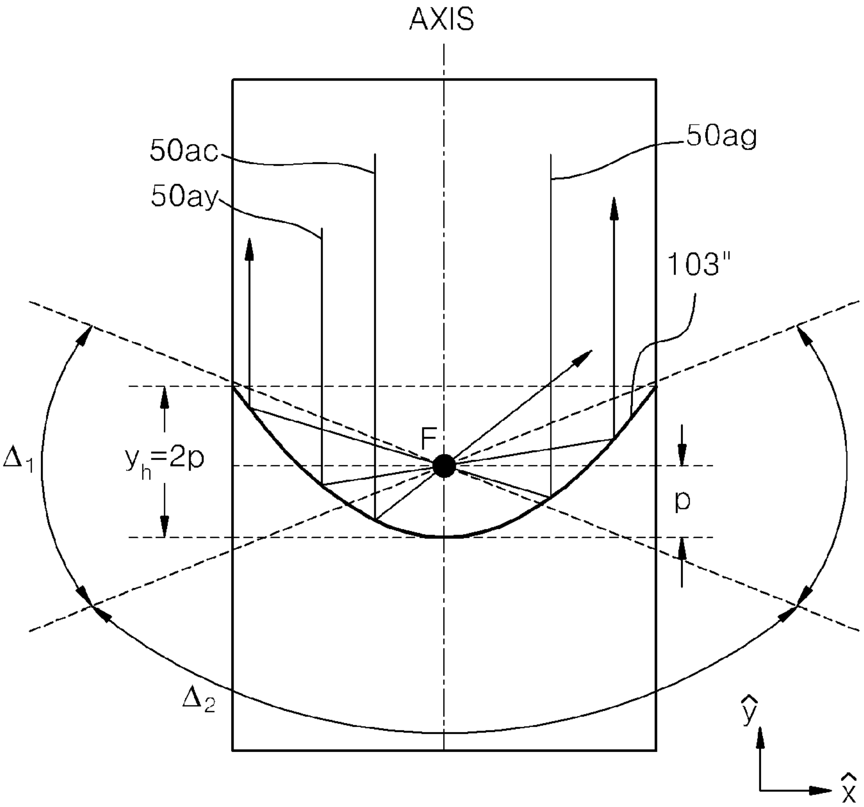
AXIS
50ac
50ag
50ay
103"
F
$\Delta_1$
$y_h$=2p
$\Delta_3$
p
$\Delta_2$
ŷ
x̂

FIG. 19

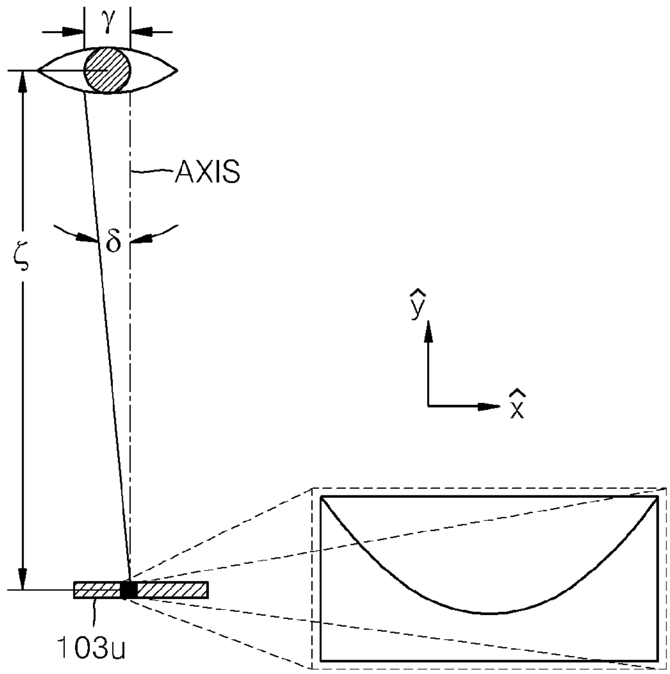
γ
AXIS
δ
ζ
ŷ
x̂
103u

FIG. 20

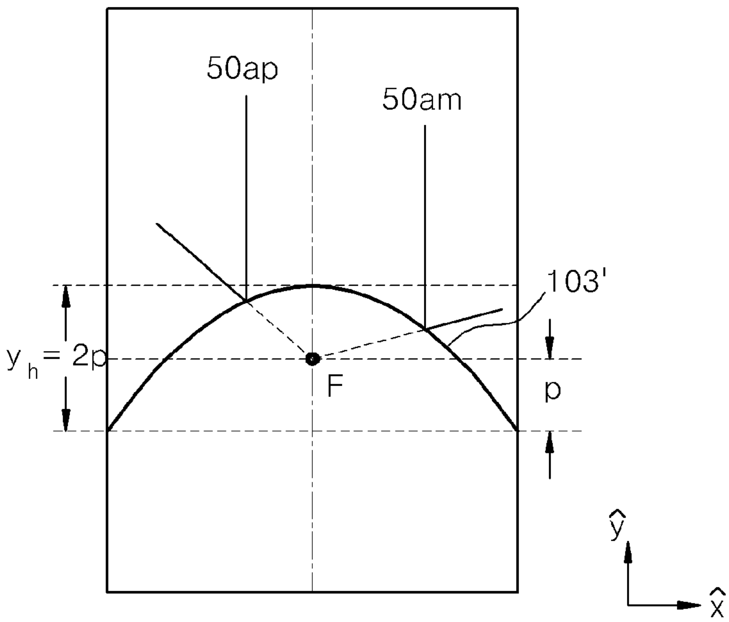
50ap
50am
103'
$y_h = 2p$
F
p
ŷ
x̂

FIG. 21

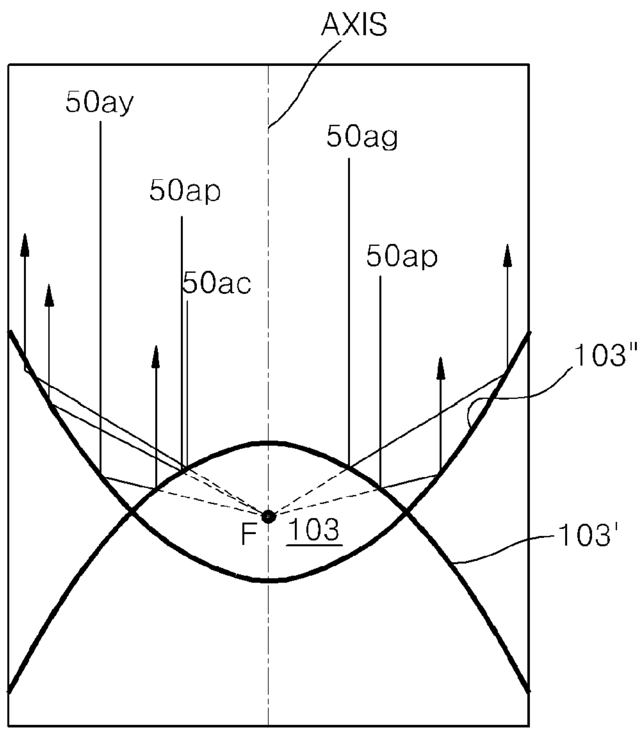
AXIS
50ay
50ag
50ap
50ac
50ap
103"
F
103
103'

FIG. 22

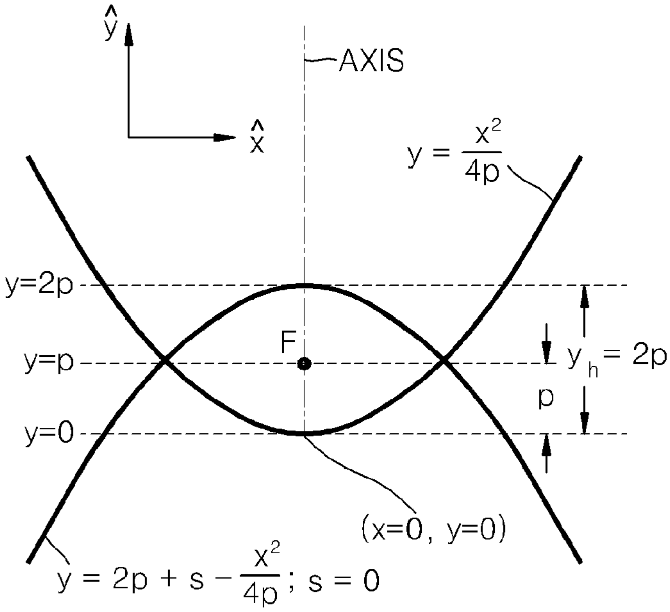
ŷ
x̂
AXIS
$y = \frac{x^2}{4p}$
y=2p
y=p
y=0
F
$y_h = 2p$
p
(x=0, y=0)
$y = 2p + s - \frac{x^2}{4p}$; s = 0

FIG. 23

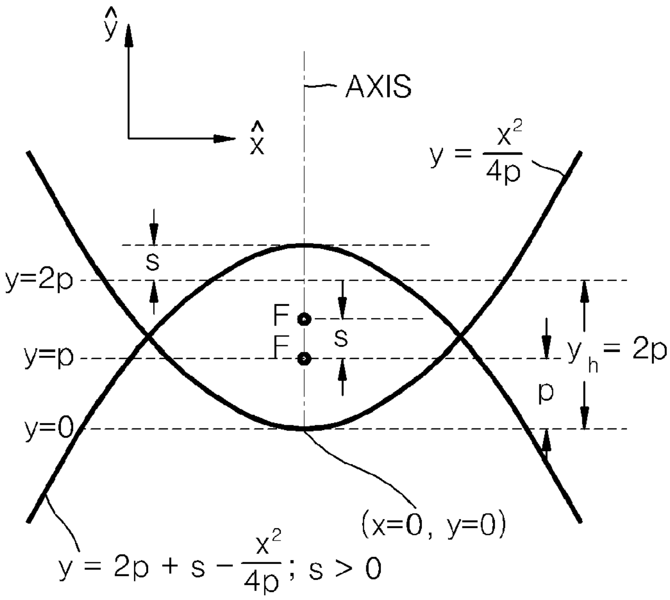
ŷ
x̂
AXIS
$y = \frac{x^2}{4p}$
s
y=2p
y=p
y=0
F
F
s
$y_h = 2p$
p
(x=0, y=0)
$y = 2p + s - \frac{x^2}{4p}$; s > 0

FIG. 24

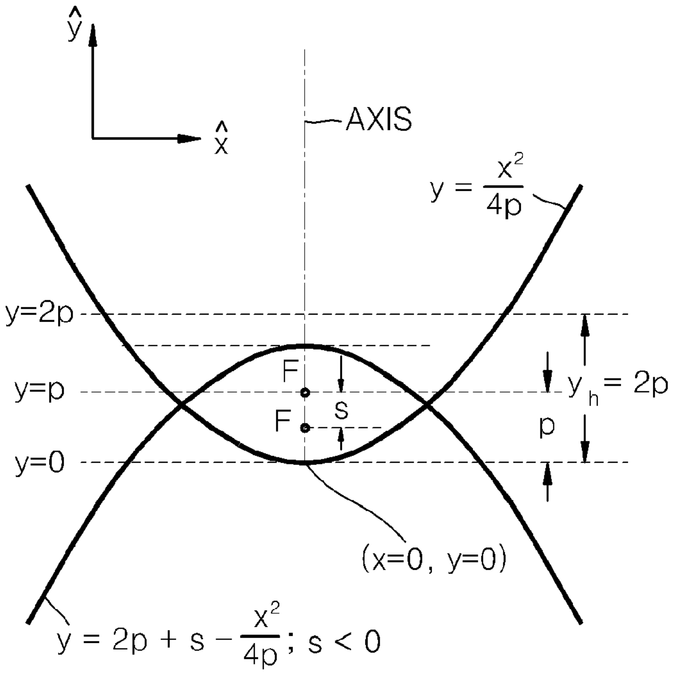

FIG. 25

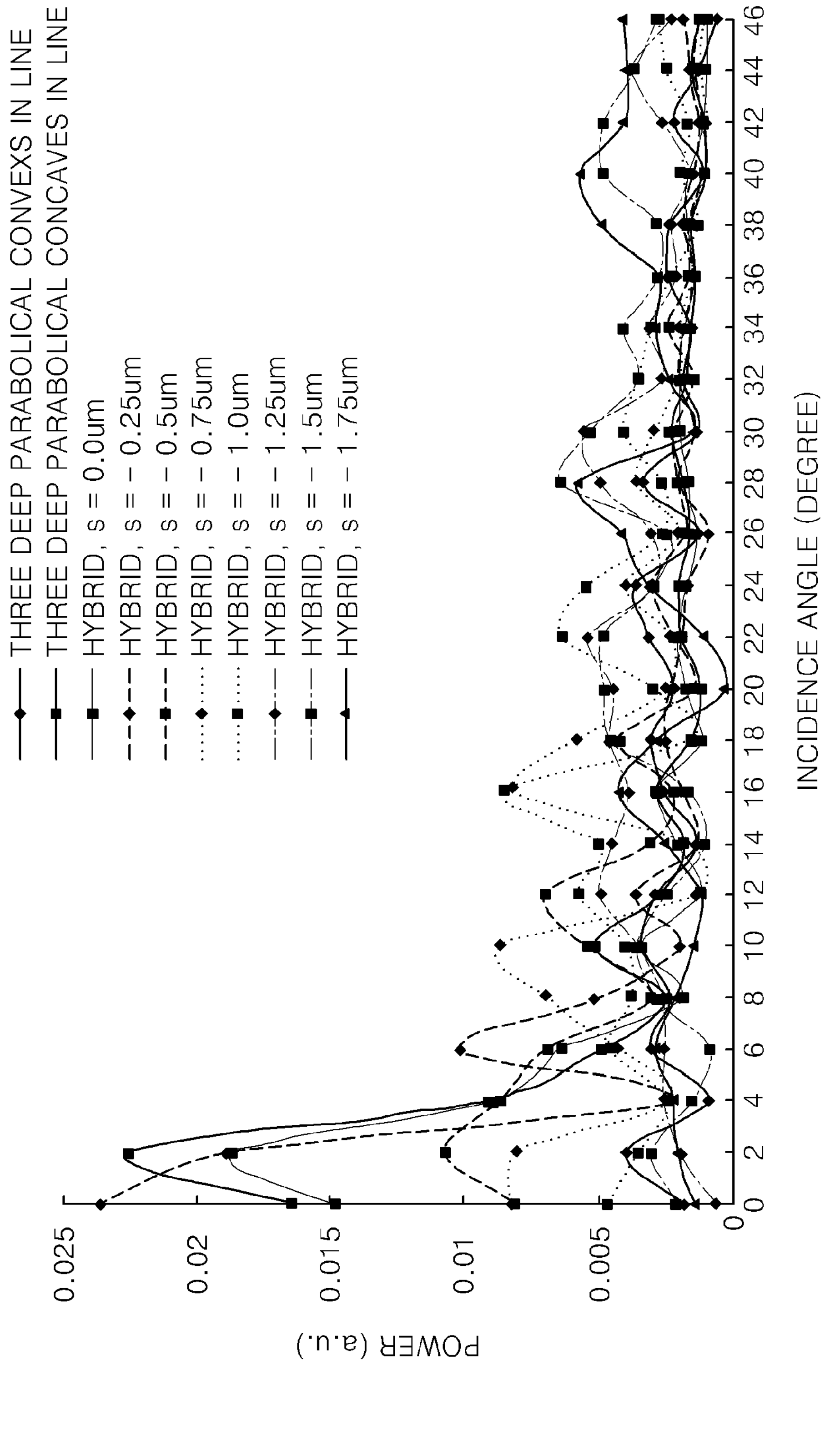
THREE DEEP PARABOLICAL CONVEXS IN LINE
THREE DEEP PARABOLICAL CONCAVES IN LINE
HYBRID, s = 0.0um
HYBRID, s = − 0.25um
HYBRID, s = − 0.5um
HYBRID, s = − 0.75um
HYBRID, s = − 1.0um
HYBRID, s = − 1.25um
HYBRID, s = − 1.5um
HYBRID, s = − 1.75um
POWER (a.u.)
0.025
0.02
0.015
0.01
0.005
0
0 2 4 6 8 10 12 14 16 18 20 22 24 26 28 30 32 34 36 38 40 42 44 46
INCIDENCE ANGLE (DEGREE)

FIG. 26

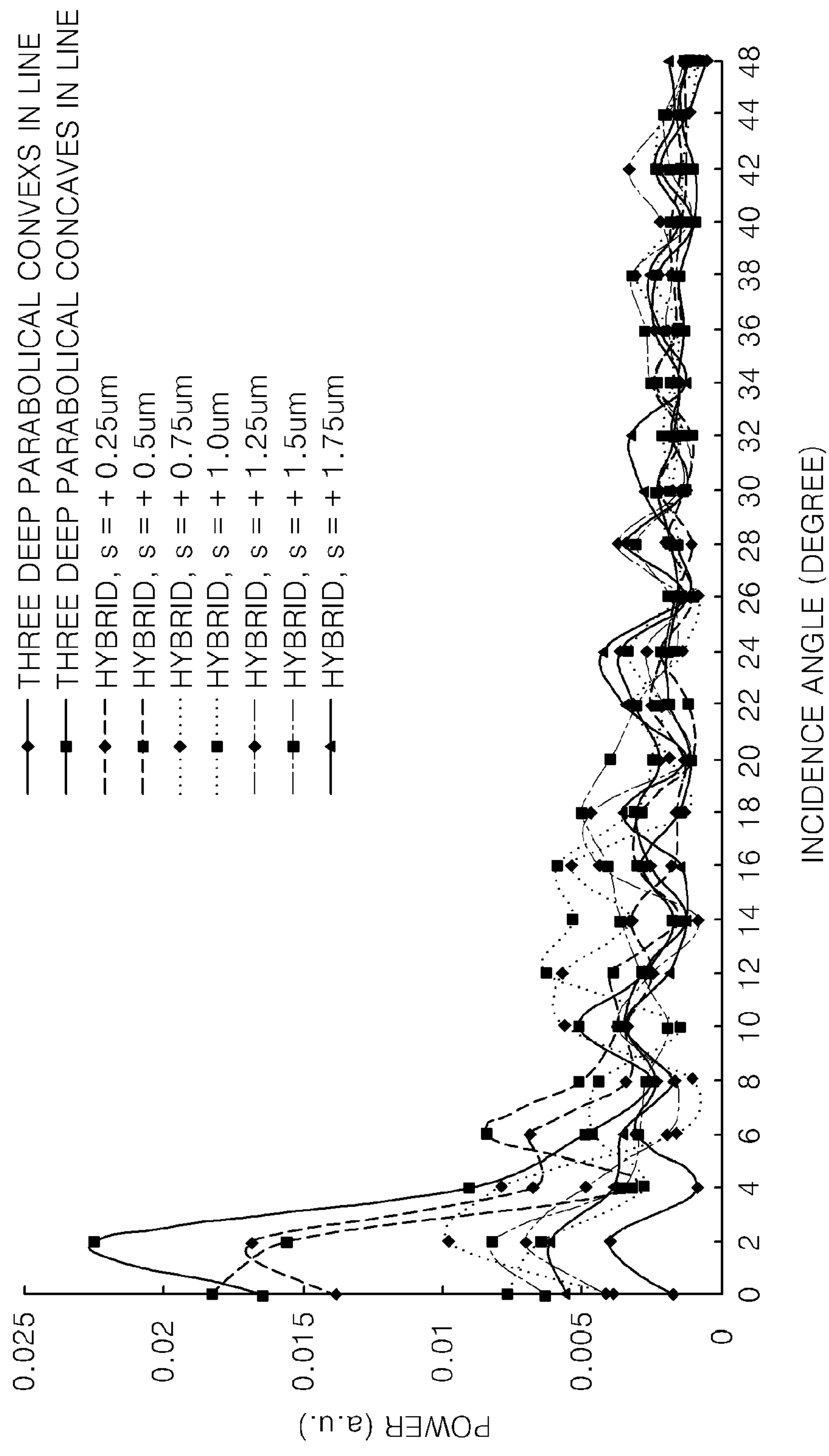
THREE DEEP PARABOLICAL CONVEXS IN LINE
THREE DEEP PARABOLICAL CONCAVES IN LINE
HYBRID, s = + 0.25um
HYBRID, s = + 0.5um
HYBRID, s = + 0.75um
HYBRID, s = + 1.0um
HYBRID, s = + 1.25um
HYBRID, s = + 1.5um
HYBRID, s = + 1.75um
POWER (a.u.)
0.025
0.02
0.015
0.01
0.005
0
INCIDENCE ANGLE (DEGREE)
0 2 4 6 8 10 12 14 16 18 20 22 24 26 28 30 32 34 36 38 40 42 44 48

FIG. 27

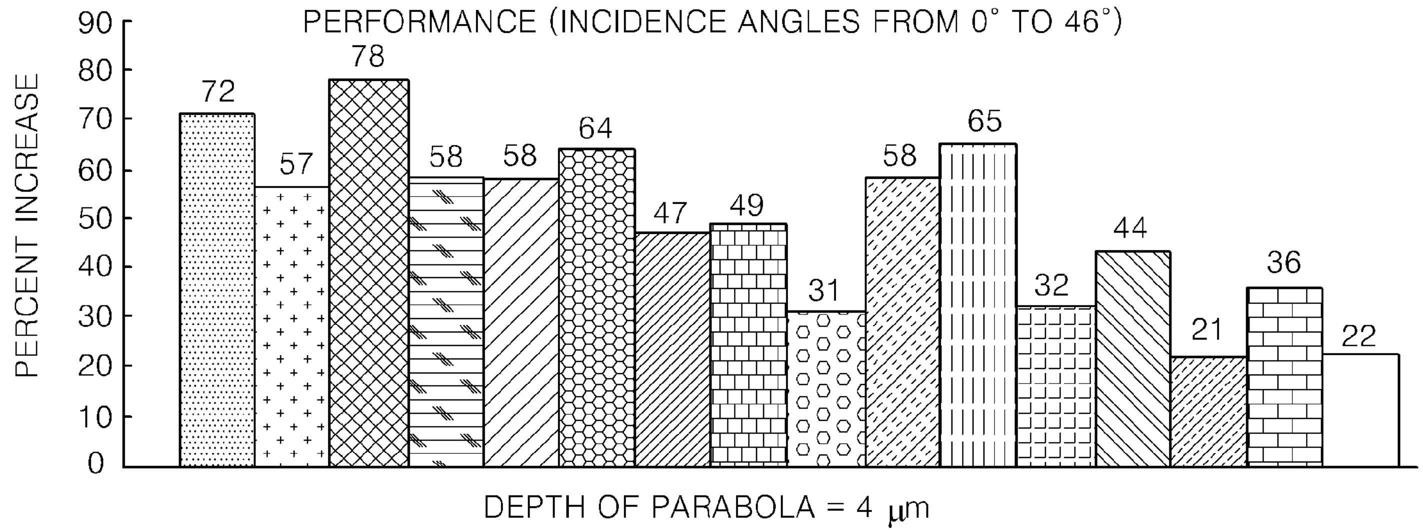


* PERCENT INCREASE VALUE IS RELATIVE TO THE PERFORMANCE VALUE OBTAINED FOR THREE DEEP PARABOLICAL CONVEXS IN LINE

THREE DEEP PARABOLICAL CONCAVES IN LINE
HYBRID, s = 0.0um
HYBRID, s = −0.25um
HYBRID, s = −0.5um
HYBRID, s = −0.75um
HYBRID, s = −1.0um
HYBRID, s = −1.25um
HYBRID, s = −1.5um
HYBRID, s = −1.75um
HYBRID, s = +0.25um
HYBRID, s = +0.5um
HYBRID, s = +0.75um
HYBRID, s = +1.0um
HYBRID, s = +1.25um
HYBRID, s = +1.5um
HYBRID, s = +1.75um

FIG. 28

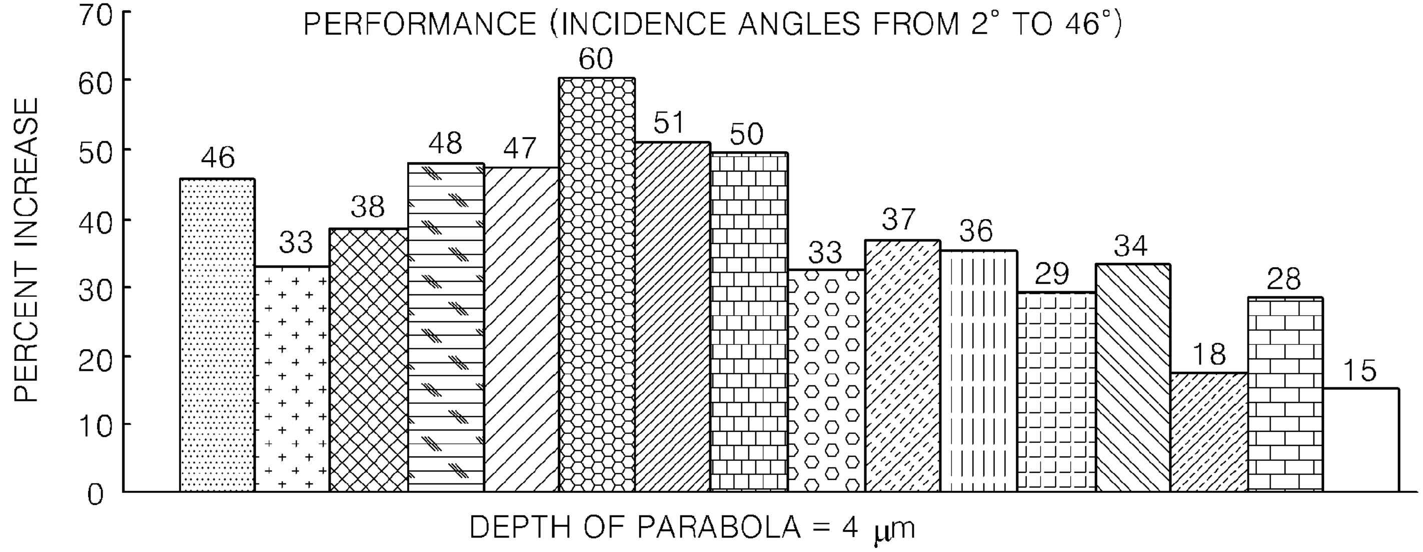


* PERCENT INCREASE VALUE IS RELATIVE TO THE PERFORMANCE VALUE OBTAINED FOR THREE DEEP PARABOLICAL CONVEXS IN LINE

THREE DEEP PARABOLICAL CONCAVES IN LINE
HYBRID, s = 0.0um
HYBRID, s = −0.25um
HYBRID, s = −0.5um
HYBRID, s = −0.75um
HYBRID, s = −1.0um
HYBRID, s = −1.25um
HYBRID, s = −1.5um
HYBRID, s = −1.75um
HYBRID, s = +0.25um
HYBRID, s = +0.5um
HYBRID, s = +0.75um
HYBRID, s = +1.0um
HYBRID, s = +1.25um
HYBRID, s = +1.5um
HYBRID, s = +1.75um

FIG. 29

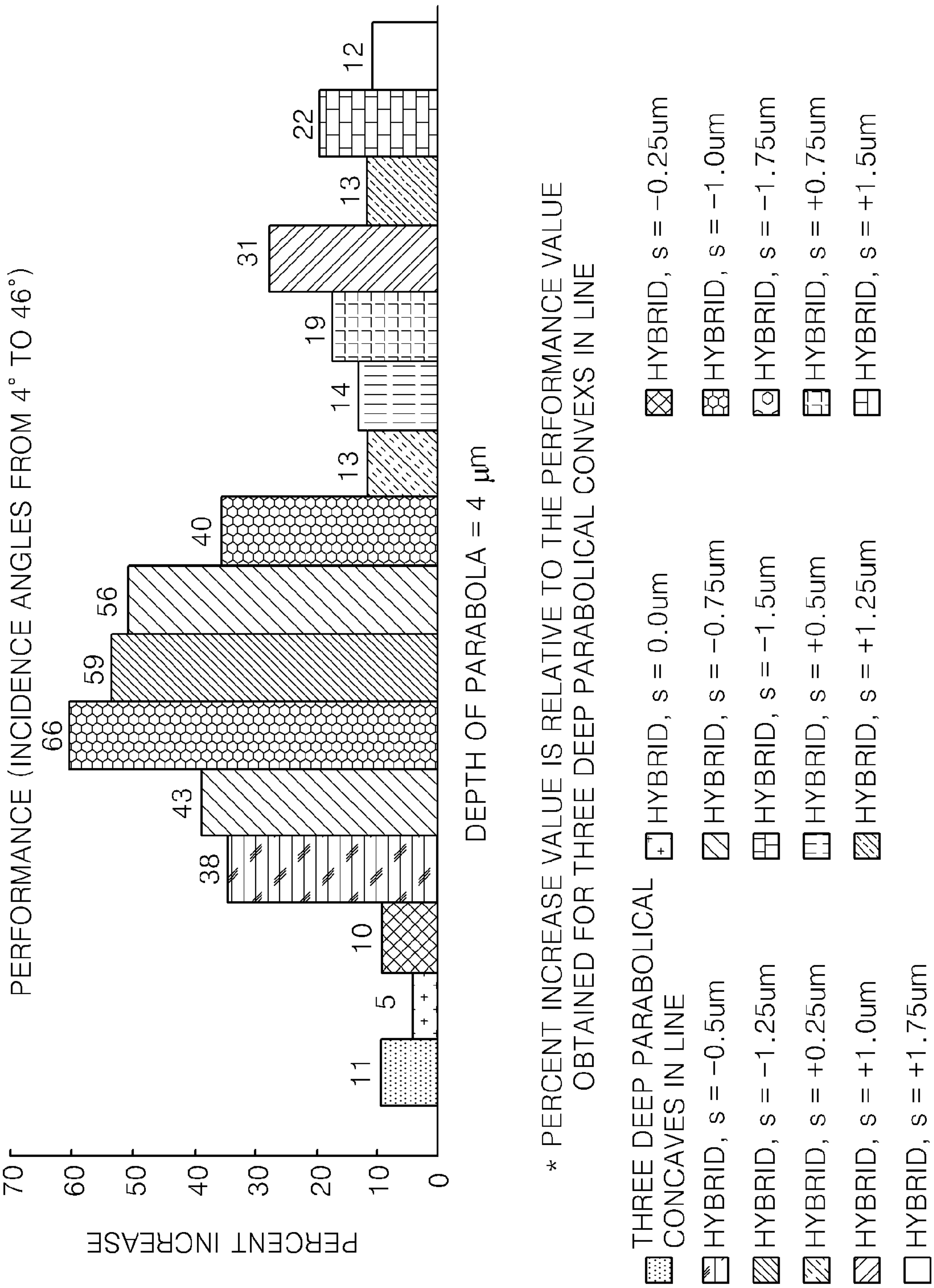
PERFORMANCE (INCIDENCE ANGLES FROM 4° TO 46°)
PERCENT INCREASE
0
10
20
30
40
50
60
70
11
5
10
38
43
66
59
56
40
13
14
19
31
13
22
12
DEPTH OF PARABOLA = 4 μm
* PERCENT INCREASE VALUE IS RELATIVE TO THE PERFORMANCE VALUE OBTAINED FOR THREE DEEP PARABOLICAL CONVEXS IN LINE
THREE DEEP PARABOLICAL CONCAVES IN LINE
HYBRID, s = 0.0um
HYBRID, s = −0.25um
HYBRID, s = −0.5um
HYBRID, s = −0.75um
HYBRID, s = −1.0um
HYBRID, s = −1.25um
HYBRID, s = −1.5um
HYBRID, s = −1.75um
HYBRID, s = +0.25um
HYBRID, s = +0.5um
HYBRID, s = +0.75um
HYBRID, s = +1.0um
HYBRID, s = +1.25um
HYBRID, s = +1.5um
HYBRID, s = +1.75um

FIG. 30

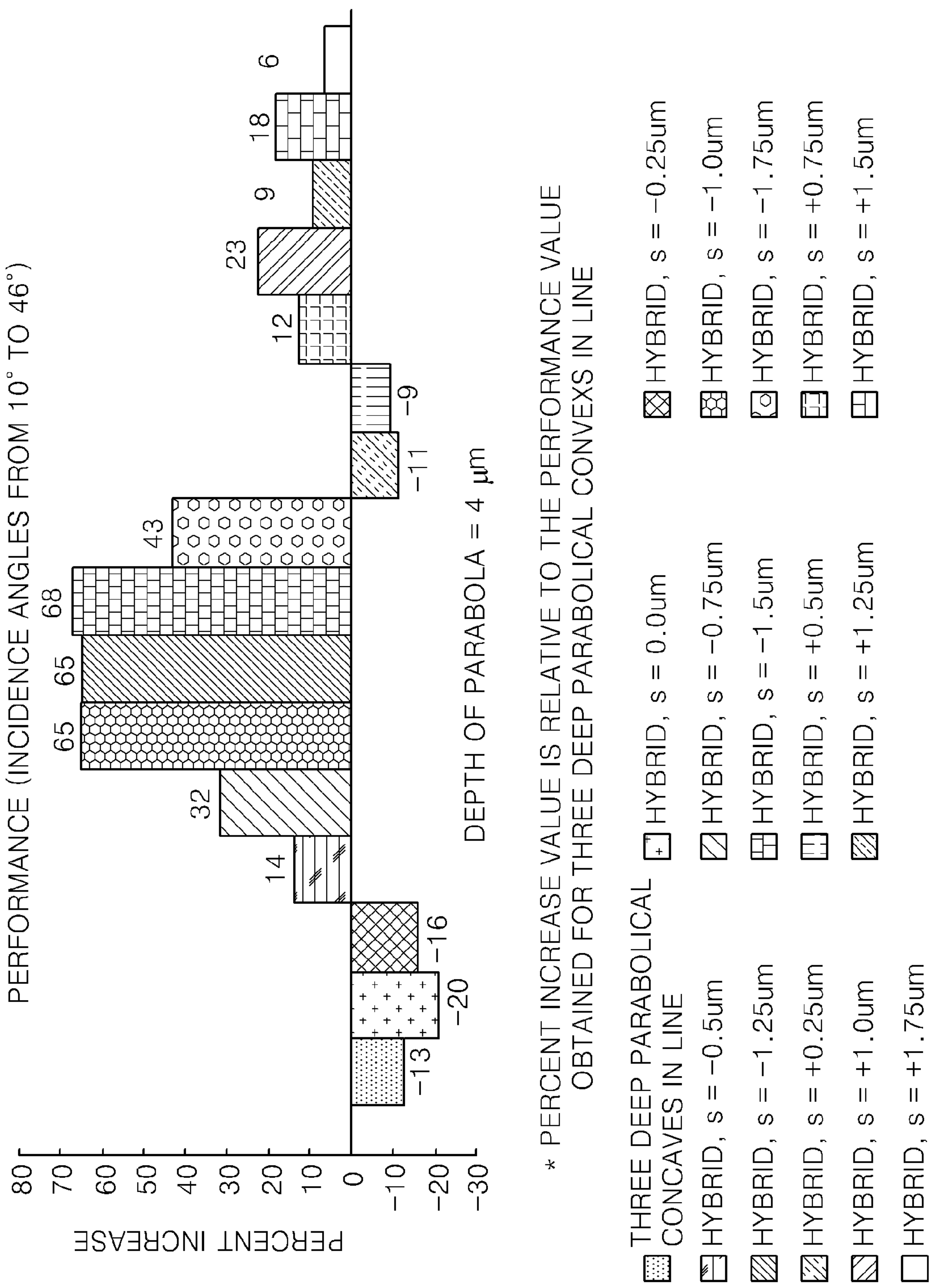
PERFORMANCE (INCIDENCE ANGLES FROM 10° TO 46°)
PERCENT INCREASE
80
70
60
50
40
30
20
10
0
-10
-20
-30
-13
-20
-16
14
32
65
65
68
43
-11
-9
12
23
9
18
6
DEPTH OF PARABOLA = 4 μm
* PERCENT INCREASE VALUE IS RELATIVE TO THE PERFORMANCE VALUE OBTAINED FOR THREE DEEP PARABOLICAL CONVEXS IN LINE
THREE DEEP PARABOLICAL CONCAVES IN LINE
HYBRID, s = -0.5um
HYBRID, s = -1.25um
HYBRID, s = +0.25um
HYBRID, s = +1.0um
HYBRID, s = +1.75um
HYBRID, s = 0.0um
HYBRID, s = -0.75um
HYBRID, s = -1.5um
HYBRID, s = +0.5um
HYBRID, s = +1.25um
HYBRID, s = -0.25um
HYBRID, s = -1.0um
HYBRID, s = -1.75um
HYBRID, s = +0.75um
HYBRID, s = +1.5um